(19) **Europäisches Patentamt**
**European Patent Office**
**Office européen des brevets**

(11) **EP 4 538 999 A1**

(12) **EUROPEAN PATENT APPLICATION**
published in accordance with Art. 153(4) EPC

(43) Date of publication:
**16.04.2025 Bulletin 2025/16**

(21) Application number: **23893368.3**

(22) Date of filing: **13.09.2023**

(51) International Patent Classification (IPC):
**G06V 40/12** (2022.01)

(52) Cooperative Patent Classification (CPC):
**G06F 21/32; G06F 18/00; G06F 18/253; G06T 3/40;**
**G06T 7/11; G06V 10/26; G06V 10/80;**
**G06V 10/806; G06V 10/82; G06V 40/12;**
**G06V 40/1347; G06V 40/1365;** G06T 2207/10048;
G06T 2207/20132

(86) International application number:
**PCT/CN2023/118472**

(87) International publication number:
**WO 2024/109275 (30.05.2024 Gazette 2024/22)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.11.2022 CN 202211473335**

(71) Applicant: **Tencent Technology (Shenzhen)**
**Company Limited**
**Shenzhen, Guangdong 518057 (CN)**

(72) Inventors:
• **YANG, Weiming**
**Shenzhen, Guangdong 518057 (CN)**

• **GUO, Runzeng**
**Shenzhen, Guangdong 518057 (CN)**
• **WANG, Shaoming**
**Shenzhen, Guangdong 518057 (CN)**
• **HOU, Jinkun**
**Shenzhen, Guangdong 518057 (CN)**
• **WANG, Jun**
**Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **HAND IMAGE PROCESSING METHOD AND APPARATUS, DEVICE, STORAGE MEDIUM, AND PROGRAM PRODUCT**

(57) A hand image processing method, executed by a hand recognition device, and comprising: acquiring a hand image, and performing feature extraction on the hand image to obtain image features of a plurality of scales (302); fusing said image features to obtain a fused image feature (304); on the basis of the fused image feature, determining a palm bounding box for identifying the palm in the hand image (306); on the basis of the palm bounding box, cropping a palm image from the hand image (308); and performing image encryption on the palm image to obtain palm image encrypted data, wherein the palm image encrypted data is to be transmitted to a server, and the server performs identity recognition on the basis of the palm image encrypted data (310).

Obtain a palm image, and extracting image features of a plurality of sizes from a palm image — 302

Fuse the image features of the plurality of sizes into a fused image feature — 304

Determine an image area defining a palm part in the palm image based on the fused image feature — 306

Extract the image area from the palm image as a palm part image — 308

Encrypt the palm part image into encrypted palm part image data for performing identification. The encrypted palm part image data can be transmitted to a server which performs identity identification using the encrypted palm part image data — 310

FIG. 3

**Description**

FIELD OF THE TECHNOLOGY

Embodiments of this application relate to the field of computer technologies, further to the field of computer vision technologies, and in particular, to a palm image processing method and apparatus, a device, a storage medium, and a program product.

BACKGROUND OF THE DISCLOSURE

With the development of computer technologies, a palm identification technology is increasingly widely applied, and may be applied to a plurality of scenarios. For example, in a payment scenario or a check in scenario at work, verification may be performed on a user identity through palm identification.

In the related art, a user provides a physical palm, and a palm identification device collects a palm image on the palm of the user, so that the palm identification device performs encryption on the palm image based on the palm image, and the encrypted palm image is configured for identity verification.

However, performing encryption and decryption on the palm image requires a large amount of time, which reduces efficiency of palm identification.

SUMMARY

According to various embodiments of this application, a palm image processing method and apparatus, a device, a storage medium, and a program product are provided.

According to an aspect, a palm image processing method is performed by a computer device, including:

obtaining a palm image of a palm, and extracting image features of a plurality of sizes from the palm image;

fusing the image features into a fused image feature;

extracting, based on the fused image feature, an image area defining the palm from the palm image as a palm part image;

encrypting the palm part image into encrypted palm part image data for performing identity identification.

According to another aspect, this application further provides a computer device, including a memory and a processor, the memory having computer-readable instructions stored therein, the computer-readable instructions, when executed by the processor, causing the computer device to implement the operations of the method embodiments in this application.

According to another aspect, this application further provides a non-transitory computer-readable storage medium, having computer-readable instructions stored therein, the computer-readable instructions, when executed by a processor of a computer device, causing the computer device to implement the operations of the method embodiments in this application.

Details of one or more embodiments of this application are provided in the subsequent accompanying drawings and descriptions. Other features, objectives, and advantages of this application become apparent from the specification, the accompanying drawings, and the claims.

BRIEF DESCRIPTION OF THE DRAWINGS

To describe the technical solutions in embodiments of this application more clearly, the following briefly introduces the accompanying drawings required for describing the embodiments. Apparently, the accompanying drawings in the following description show only some embodiments of this application, and a person of ordinary skill in the art may still derive other accompanying drawings from the accompanying drawings without creative efforts.

FIG. 1 is a schematic diagram of a palm image processing method according to an exemplary embodiment of this application.

FIG. 2 is a schematic diagram of an architecture of a computer system according to an exemplary embodiment of this application.

FIG. 3 is a flowchart of a palm image processing method according to an exemplary embodiment of this application.

FIG. 4 is a flowchart of a palm image processing method according to an exemplary embodiment of this application.

FIG. 5 is a schematic diagram of image feature fusion according to an exemplary embodiment of this application.

FIG. 6 is a schematic diagram of finger gap points in a palm according to an exemplary embodiment of this application.

FIG. 7 is a schematic diagram of a palm image processing method according to an exemplary embodiment of this application.

FIG. 8 is a schematic flowchart of a palm image processing method applied to a cross-device payment scenario according to an exemplary embodiment of this application.

FIG. 9 is a schematic flowchart of a palm image processing method applied to a cross-device identity verification scenario according to an exemplary embodiment of this application.

FIG. 10 is a schematic flowchart of a palm image processing method according to an exemplary embodiment of this application.

FIG. 11 is a framework diagram of a generation phase of a palm detection model and a prediction phase of a palm box according to an exemplary embodiment of this application.

FIG. 12 is a flowchart of a method for training a palm detection model according to an exemplary embodiment of this application.

FIG. 13 is a flowchart of a method for training a palm detection model according to an exemplary embodiment of this application.

FIG. 14 is a block diagram of a palm image processing apparatus according to an exemplary embodiment of this application.

FIG. 15 is a block diagram of an apparatus for training a palm detection model according to an exemplary embodiment of this application.

FIG. 16 is a schematic diagram of a structure of a computer device according to an exemplary embodiment of this application.

DESCRIPTION OF EMBODIMENTS

The technical solutions in embodiments of this application are clearly and completely described in the following with reference to the accompanying drawings in embodiments of this application. Apparently, the described embodiments are merely some rather than all of embodiments of this application. All other embodiments obtained by a person of ordinary skill in the art based on embodiments of this application without creative efforts shall fall within the protection scope of this application.

A computer vision (CV) technology is a science that studies how to use a machine to "see", and furthermore, is machine vision that a camera and a computer are used for replacing human eyes to perform identification, measurement, and the like on a target, and further perform graphic processing, so that the computer processes the target into an image more suitable for human eyes to observe, or an image transmitted to an instrument for detection. As a scientific discipline, the computer vision studies related theories and technologies and attempts to establish an artificial palm image identification system that can obtain information from images or multidimensional data. The computer vision technologies generally include technologies such as image processing, image identification, image semantic understanding, image retrieval, video processing, video semantic understanding, video content/behavior identification, three-dimensional object reconstruction, a 3D technology, virtual reality, augmented reality, synchronous positioning, and map construction, and further include common biometric feature identification technologies.

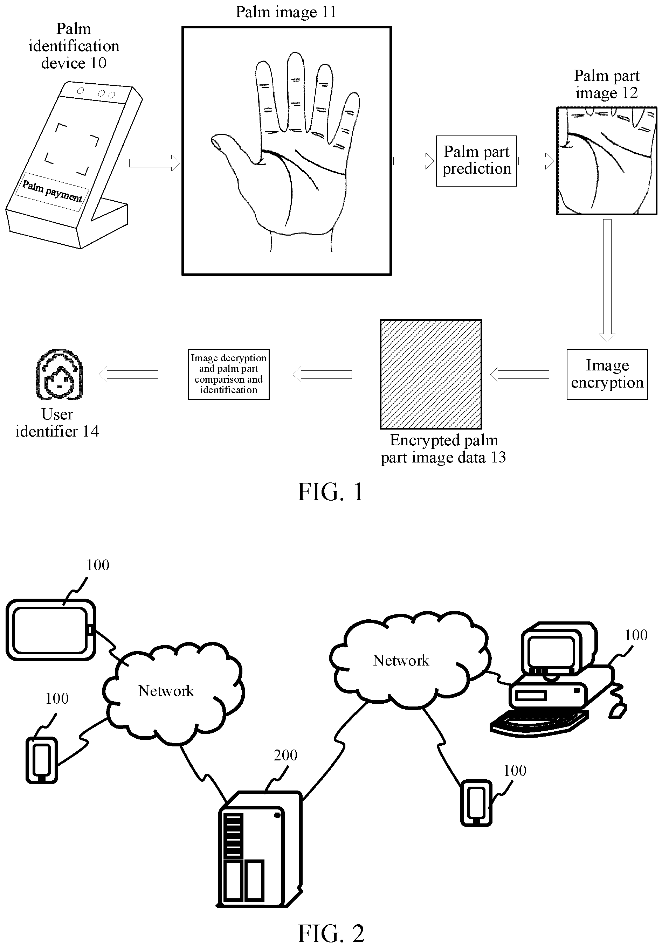

An embodiment of this application provides a schematic diagram of a palm image processing method. As shown in FIG. 1, the method may be performed by a palm identification device 10. The palm identification device 10 may have an image encryption function.

For example, the palm identification device 10 includes a camera, and the palm identification device 10 obtains a palm image 11 through a camera. The palm identification device 10 may also be connected to an image collector. The image collector includes a camera. The palm identification device 10 may obtain the palm image 11 collected by the image collector. The palm identification device 10 performs palm prediction on the palm image 11, to obtain a palm part image 12 corresponding to a palm in the palm image 11. The palm identification device 10 performs image encryption on the palm part image 12, to obtain encrypted palm part image data 13. The palm identification device 10 transmits the encrypted palm part image data 13 to a palm identification server for decryption and palm comparison and identification, to obtain a user identifier 14 corresponding to the palm image 11.

For example, the palm identification device 10 obtains the palm image 11, and extracts image features of a plurality of sizes from the palm image 11. The palm identification device 10 fuses the image features of the plurality of sizes into a fused image feature. The palm identification device 10 determines an image area in the palm image 11 based on the fused image feature. The palm identification device 10 extracts the image area from the palm image 11 as a palm part image 12 . The palm identification device 10 encrypts the palm part image 12 into encrypted palm part image data 13.

The encrypted palm part image data 13 may be transmitted to the palm identification server for decryption and palm comparison and identification, to obtain the user identifier 14 corresponding to the palm image 11.

The palm part image 12 is an effective identification area in the palm image 11, or the palm part image 12 is an area in the palm image 11 in which the palm is located, or the palm part image 12 is an area in the palm image 11 that can be configured for palm identification.

In the embodiments of the present disclosure including the embodiments of both the claims and the specification (hereinafter referred to as "all embodiments of the present disclosure"), , manners in which the palm identification device 10 transmits the encrypted palm part image data 13 to the palm identification server include at least one of network transmission, data line transmission, and Bluetooth transmission, but is not limited thereto. This is not specifically limited in the embodiments of this application.

For example, the palm identification device 10 performs feature extraction on the palm image 11, to obtain the image features. The palm identification device 10 performs feature fusion on the image features, to obtain the fused image feature. The palm identification device 10 determines the image area in the palm image, and extracts the palm part image 12 from the palm image based on the image area.

For example, the image area can be obtained by prediction by the palm detection model, and the palm detection model includes a backbone network, a neck network, and a prediction network.

The palm identification device 10 inputs the palm image 11 into the backbone network; the backbone network performs a slicing operation on the palm image, to obtain slice images of the plurality of sizes; and the palm identification device 10 performs feature extraction on the slice images of the plurality of sizes, to obtain the image features of the plurality of sizes corresponding to the palm image 11. The size represents a size of a feature, and the plurality of sizes refer to a plurality of sizes.

For example, a size of the input palm image 11 is 640*640, and sizes of the output image features of the plurality of sizes are: 80*80, 40*40, and 20*20. A size or a size of an image or a feature may be a dimension of a matrix representing the image or the feature.

For example, the palm identification device 10 inputs the image features of the plurality of sizes into the neck network for feature fusion, to obtain the fused image feature. The palm identification device 10 inputs the fused image feature into the prediction network for prediction, to obtain a box identifying the image area in the palm image 11. The palm identification device 10 removes an image area outside the box in the palm image 11 and uses the remaining image as the palm part image 12.

In summary, according to the method provided in all embodiments of the present disclosure, the image features of the plurality of sizes corresponding to the palm image are obtained by obtaining the palm image and performing feature extraction; feature fusion is performed on the image features of the plurality of sizes, to obtain the fused image feature; an image area corresponding to a palm in the palm image is determined based on the fused image feature; the palm part image corresponding to the palm is obtained by cropping the palm image based on the image area; and image encryption is performed on the palm part image, to obtain the encrypted palm part image data, and the encrypted palm part image data is transmitted to the palm identification server for decryption and palm comparison and identification, to perform identity identification. In this application, the palm part image corresponding to the palm is obtained by cropping the palm image, and image encryption, transmission, and decryption are performed only on the palm part image. This reduces time of recognizing the palm image and improves identification efficiency of palm identification.

FIG. 2 is a schematic diagram of an architecture of a computer system according to an embodiment of this application. The computer system may include: a palm identification device 100 and a palm identification server 200.

The palm identification device 100 may be an electronic device such as a mobile phone, a tablet computer, a vehicle-mounted terminal (vehicle), a wearable device, a personal computer (PC), a voice interaction device with a palm image identification function, an appliance with a palm image identification function, a vehicle-mounted terminal, an aircraft, or a vending terminal. A client running an application may be installed in the palm identification device 100. The application may be an application specifically performing palm image identification, or another application providing a palm image identification function. This is not limited in this application. In addition, a form of the application is not limited in this application, including but not limited to an application (App), a sub-application, a web page program, and the like installed in the palm identification device 100. The sub-application is a program running in a running environment provided by a parent application program. The parent application program is an independent native application. The child application runs in dependence on the parent application.

The palm identification server 200 may be an independent physical server, or may be a server cluster including a plurality of physical servers or a distributed system, or may be a cloud server providing basic cloud computing services, such as a cloud server providing cloud computing services, a cloud database, cloud computing, a cloud function, cloud storage, a network service, cloud communication, a middleware service, a domain name service, a security service, a content delivery network (CDN), big data, and an artificial palm image identification platform. The palm identification server 200 may be a backend server of the foregoing application, and is configured to provide a backend service for a client of the application.

The cloud technology is a hosting technology that unifies a series of resources such as hardware, software, and networks in a wide area network or a local area network to implement computing, storage, processing, and sharing of data. The cloud technology is a collective name of a network technology, an information technology, an integration technology, a management platform technology, an application technology, and the like based on an application of a cloud computing business mode, and may form a resource pool, which is used as required, and is flexible and convenient. The cloud computing technology becomes an important support. A backend service of a technical network system requires a large amount of computing and storage resources, such as video websites, image websites, and more portal websites. As the internet industry is highly developed and applied, each article may have its own identifier in the future and needs to be transmitted to a backend system for logical processing. Data at different levels is separately processed, and data in various industries requires strong system support, which can only be implemented through cloud computing.

In all embodiments of the present disclosure, the server may be further implemented as a node in a blockchain system. A blockchain is a new application mode of computer technologies such as distributed data storage, point-to-point transmission, a consensus mechanism, and an encryption algorithm. The blockchain is essentially a decentralized database and is a string of data blocks generated through association by using a cryptographic method. Each data block includes information of a batch of network transactions, the information being used for verifying the validity of information of the data block (anti-counterfeiting) and generating a next block. The blockchain may include an underlying blockchain platform, a platform product service layer, and an application service layer.

The palm identification device 100 and the palm identification server 200 may communicate through a network, such as a wired network or a wireless network.

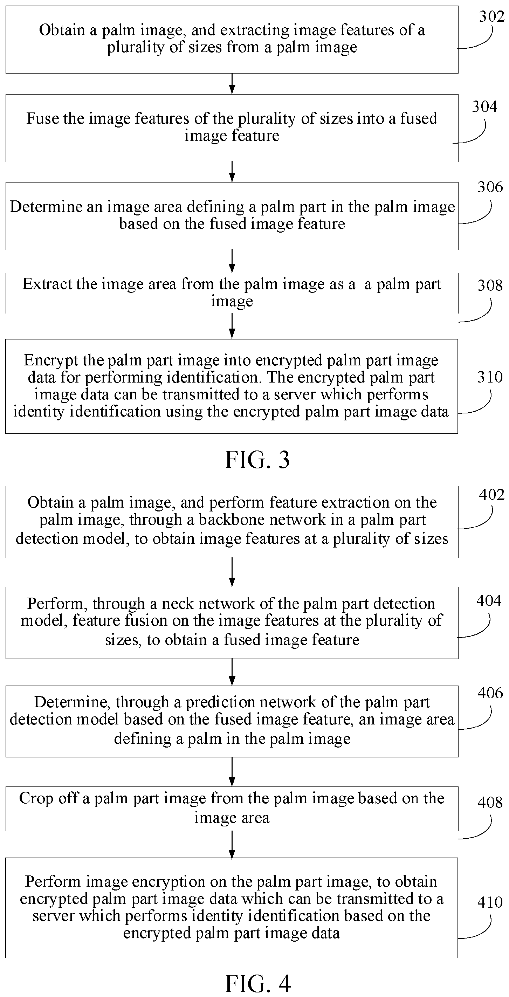

FIG. 3 is a flowchart of a palm image processing method according to an exemplary embodiment of this application. The method is performed by a palm identification device. The method may also be performed by a server. The method includes the following operations.

Operation 302: Obtain a palm image of a palm, and extract image features of a plurality of sizes from the palm image.

The palm image is an image obtained by capturing a physical palm. The physical palm includes a palm and fingers. The palm is an organism connecting a physical arm and physical fingers. The palm image includes an image of all or a part of the physical palm. For ease of description, an image of the physical palm in the palm image is referred to as a palm subsequently. The palm included in the palm image may be a physical palm of a user whose identity identification is to be performed. The palm in the palm image includes at least a palm, may further include the fingers or a part of the arm, and may further include an image of an environment in which the physical palm is located when the physical palm is captured.

A size is a size of an image feature, and may be represented by a matrix dimension number, such as 100* 100, 80*80, 60*60, or 40*40. The plurality of sizes refer to two or more sizes, and each size is different. A maximum size in the plurality of sizes may be the same as the size of the palm image, and is generally smaller than the size of the palm image.

The palm image may be obtained by capturing, by the palm identification device, a physical palm of a user whose identity is to be verified, or may be transmitted by another device. The palm identification device may directly collect an image of the physical palm, to obtain the palm image. The palm identification device may also collect the image of the physical palm through an image collector connected to the palm image, to obtain the palm image. The palm identification device can perform feature extraction on the obtained palm image, to obtain image features of a plurality of sizes corresponding to the palm image.

For example, the palm identification device is a cash register device in a store, and the cash register device in the store captures a physical palm of a user through a camera, to obtain the palm image. Alternatively, the palm identification device is a palm image identification server, and after capturing a palm image of a user, a cash register device in a store transmits the palm image to the palm image identification server.

For example, the image features of the plurality of sizes may be respectively extracted from low-resolution images of the plurality of sizes by downsampling a high-resolution palm image into the low-resolution images of the plurality of sizes. For example, the image features include an image feature of each of the plurality of sizes. The image feature of each of the plurality of sizes may be extracted from a palm image of the corresponding size. The high resolution and the low resolution are relative concepts, and the high resolution is a resolution higher than the low resolution.

For example, a size of the input palm image is 640*640, and sizes of the output image features of the plurality of sizes are: 80*80, 40*40, and 20*20.

Operation 304: Fuse the image features of the plurality of sizes, to obtain a fused image feature.

The palm identification device may perform feature fusion on the image features of the plurality of sizes, to obtain the fused image feature.

The image features of the plurality of sizes refer to features obtained by performing feature extraction on images of the plurality of sizes. Image features of different sizes may express different information. In the image features of the plurality of sizes, image features of larger sizes express more position information, and image features of smaller sizes express more semantic information.

For example, the palm identification device extracts features of the plurality of sizes, under different receptive fields, and in different categories, and fuses the image features of the plurality of sizes, to obtain the fused image feature corresponding to the palm image.

Operation 306: Determine, based on the fused image feature, an image area defining the palm in the palm image.

The image area is an identifier representing a position of the palm in the palm image. The image area includes the palm in the palm image. A boundary of a box identifying the image area encloses the palm in the palm image.

In all embodiments of the present disclosure, a shape of the image area may be a regular shape, for example, may be at least one of a rectangle, a square, a rhombus, a hexagon, a circle, or a triangle. The shape of the image area may alternatively be an irregular shape. The regular shape is a shape that can be drawn by using a fixed parameter and based on a fixed rule. The irregular shape cannot be drawn by using the fixed parameter and based on the fixed rule, and can generally only be represented by a set of points that constitute the irregular shape.

The palm identification device can perform prediction based on the fused image feature by using artificial intelligence, to determine the image area corresponding to the palm in the palm image.

In all embodiments of the present disclosure, a computer device can determine, based on the fused image feature, the position of the image area in the palm image that identifies the palm in the palm image. When the image area is of the regular shape, the position may be represented by a value of the fixed parameter required for drawing the regular shape, for example, may be represented by a position of a fixed point of the image area and a size parameter of the image area. The fixed point is a point whose position is fixed relative to the image area. The size parameter is a parameter representing a size of the image area. For example, when the image area is of the rectangle shape, the fixed point may be any corner point or a center point of the rectangle, and the size parameter is a side length of an adjacent side of the image area.

Operation 308: Extract the image area from the palm image as a palm part image .

The palm part image is an effective area for palm identification in the palm image, or the palm part image is an area in the palm image in which the palm is located, or the palm part image is an area in the palm image that can be used in palm identification.

For example, the palm identification device removes, based on the position of the image area, other image area located outside the boundary of the image area in the palm image, and uses the remaining image as the palm part image.

Operation 310: Encrypt the palm part image into encrypted palm part image data for performing identity identification. The encrypted palm part image data, for example, can be transmitted to a server which performs identity identification using the encrypted palm part image data.

The encrypted palm part image data is data obtained by encrypting the palm part image. The palm part image can be obtained by decrypting the encrypted palm part image data. The encrypted palm part image data may be a bit stream or a word string, or may be an image with content that is difficult to identify by naked eyes. The palm part image is configured for being transmitted to a server, and the server performs identity identification based on the encrypted palm part image data.

The palm identification device may access a network and transmit the encrypted palm part image data to the server through the network. The palm identification device may also transmit the encrypted palm part image data to a terminal through a point-to-point connection between the palm identification device and the terminal, and then the terminal accessing the network transmits the encrypted palm part image data to the server. When the palm identification device is the server, the encrypted palm part image data may be transmitted to another server through a direct cable or the network.

In all embodiments of the present disclosure, the server may decrypt the encrypted palm part image data, to obtain the palm part image, and then perform identity identification based on the palm part image obtained by decryption.

In all embodiments of the present disclosure, the server may decrypt the encrypted palm part image data, to obtain the palm part image, and search a database for a palm part image matching the palm part image obtained by decryption. When the matching palm part image is found, a user identifier associated with the matching palm part image is determined, to perform identity identification. When no matching palm part image is found, it may be determined that identity identification fails.

In all embodiments of the present disclosure, the server may decrypt the encrypted palm part image data, to obtain the palm part image, extract a palm feature from the palm part image, and then search the database for a palm feature matching the extracted palm feature. When the matching palm feature is found, the user identifier associated with the matching palm feature is determined, to perform identity identification.

In all embodiments of the present disclosure, after determining the user identifier by performing identity identification based on the encrypted palm part image data, the server can further verify a permission corresponding to the user identifier. When verifying that the user identifier has a permission for a preset function, the server may further execute or trigger the preset function. The preset function is, for example, access control or another function that needs to verify a user permission.

In all embodiments of the present disclosure, manners in which the palm identification device transmits the encrypted palm part image data to the palm identification server include at least one of network transmission, data line transmission, and Bluetooth transmission, but is not limited thereto. This is not specifically limited in embodiments of this application.

The palm identification device may perform decryption and palm comparison and identification based on the encrypted palm part image data, to perform identity identification. The palm comparison and identification may be specifically comparing and recognizing the palm feature in the palm part image with a preset palm feature in the database.

The preset palm feature is a palm feature of a palm of a stored user identifier, and each preset palm feature has a corresponding user identifier, representing that the preset palm feature belongs to the user identifier and is the palm feature of the palm of the user. The user identifier may be any user identifier. For example, the user identifier is a user identifier registered in a payment application, or the user identifier is a user identifier registered in an enterprise.

In all embodiments of the present disclosure, the palm identification server includes the database. The database includes a plurality of preset palm features and the user identifier corresponding to each preset palm feature. In the database, the preset palm features and the user identifiers may be in a one-to-one correspondence, or one user identifier may correspond to at least two preset palm features.

For example, a plurality of users register in the payment application, a preset palm feature of each user is bound with a corresponding user identifier, and the palm features of the plurality of users and the corresponding user identifiers are correspondingly stored in the database. Subsequently, when the user uses the payment application, a target user identifier is determined by performing palm comparison and identification on a first palm area of an infrared image and a second palm area of a color image and the preset palm features in the database, to implement identity verification on the user.

For example, the palm identification device transmits the encrypted palm part image data to a palm identification server for decryption and palm comparison and identification, to obtain a user identifier corresponding to the palm image.

In summary, according to the method provided in all embodiments of the present disclosure, the image features of the plurality of sizes corresponding to the palm image are obtained by obtaining the palm image and performing feature extraction; feature fusion is performed on the image features of the plurality of sizes, to obtain the fused image feature; prediction is performed based on the fused image feature, to obtain the image area corresponding to the palm in the palm image; the palm part image corresponding to the palm is obtained by cropping the palm image based on the image area; and image encryption is performed on the palm part image, to obtain the encrypted palm part image data, and the encrypted palm part image data is transmitted to the palm identification server for decryption and palm comparison and identification, to obtain a user identifier corresponding to the palm image. In this application, the palm part image corresponding to the palm is obtained by cropping the palm image, and image encryption, transmission, and decryption are performed only on the palm part image. This reduces time of recognizing the palm image and improves identification efficiency of palm identification.

FIG. 4 is a flowchart of a palm image processing method according to an exemplary embodiment of this application. The method is performed by a palm identification device. The method includes the following operations.

Operation 402: Obtain a palm image, and extract, through a backbone network in a palm detection model, image features of a plurality of sizes from the palm image.

The palm image is a palm image of a to-be-determined user identifier.

For example, the palm identification device captures a physical palm of the user, to obtain the palm image. The palm image includes the palm. The palm may be a left palm of the user or a right palm of the user.

For example, the palm identification device is an internet of things device. The internet of things device captures the left palm of the user through a camera, to obtain the palm image. The internet of things device may be a cash register device in a store. For another example, when the user shops for a transaction in the store, the user extends a palm toward a camera of a payment terminal in the store, and the payment terminal in the store captures the physical palm of the user through the camera, to obtain the palm image.

In all embodiments of the present disclosure, the palm identification device establishes a communication connection with another device, and receives, through the communication connection, a palm image transmitted by the another device. For example, the palm identification device is a payment application server, and the another device may be a payment terminal. After the payment terminal captures the physical palm of the user, to obtain the palm image, the palm image is transmitted to the payment application server through the communication connection between the payment terminal and the payment application server, so that the payment application server can determine a user identifier of the palm image.

In all embodiments of the present disclosure, the image area is obtained through prediction by a palm detection model, and the palm detection model includes a backbone network; and the performing feature extraction on the palm image, to obtain image features of a plurality of sizes includes: slicing the palm image through the backbone network into slice images of the plurality of sizes; and extracting, through the backbone network, the image features of the plurality of sizes from the slice images of the plurality of sizes respectively.

The palm detection model is an artificial intelligence model, may be a deep learning model, or may be a neural network model. The palm detection model has at least a function of determining, based on a fused image feature, an image area box defining a palm in the palm image. The backbone network is a structure configured for extracting image features of a plurality of sizes from the palm image in the palm detection model. The slicing operation is an operation of segmenting the palm image to generate images of smaller sizes. The smaller size means that a size of the generated image is smaller than the size of the palm image. Pixels in the slice image are derived from the palm image.

The palm identification device may perform a slicing operation through the backbone network, to obtain the slice images of the plurality of sizes. The palm identification device may perform feature extraction on the slice images of the plurality of sizes, to obtain the image features of the plurality of sizes corresponding to the palm image.

In all embodiments of the present disclosure, the performing a slicing operation on the palm image through the backbone network, to obtain slice images of the plurality of sizes includes: downsampling a first slice image into a second slice image which serves as one of the slice images, where the palm image serves as the first slice image of an initial downsampling operation, the first slice image of a downsampling operation after the initial downsampling operation is a second slice image of a previous downsampling operation. For example, the slicing operation includes: determining, through the backbone network and based on the palm image, a slice image of a maximum size in the plurality of sizes; and using, through the backbone network, the slice image of the maximum size as a first layer, and starting downsampling layer by layer, to obtain the slice images of the plurality of sizes including the slice image at the first layer.

A computer device may first determine, based on the palm image, the slice image of the maximum size in the plurality of sizes. The size of the image feature of the maximum size may be smaller than or equal to the size of the palm image. The computer device may downsample the palm image once, to generate the slice image of the maximum size in the plurality of sizes.

Downsampling the palm image is a process of sampling at least one pixel in the palm image. Pixels obtained through downsampling are spliced in sequence in the palm image, so that a slice image at a smaller size can be obtained.

If a quantity of the plurality of sizes is N, the plurality of sizes are N sizes. The N sizes are all different sizes, and therefore, there is a maximum size in the N sizes. The slice image of the maximum size is used as a first layer, downsampling layer by layer is started from the first layer, an $n^{th}$ layer is downsampled to obtain a slice image at an $(n+1)^{th}$ layer, and an $(N-1)^{th}$ layer is downsampled to obtain a slice image at the $N^{th}$ layer. n is a positive integer from 1 to N-1. Finally, a total of N slice images at the first layer to the $N^{th}$ layer may be obtained.

In all embodiments of the present disclosure, the slice images of the plurality of sizes are obtained by downsampling layer by layer, which provides a new way to obtain the slice images of the plurality of sizes by segmenting the palm image.

In all embodiments of the present disclosure, the slicing the palm image through the backbone network into slice images of the plurality of sizes includes: downsampling, using the backbone network, the palm image for a plurality of times respectively at different rates to obtain the slice images of the plurality of sizes. For example, the slicing operation may include: downsampling and splicing, through the backbone network, pixels in the palm image of the plurality of sizes, to obtain the slice images of the plurality of sizes. There are two adjacent pixels in slice images of different sizes, and a quantity of pixels between the two pixels at which sampling occurs in the palm image is different.

In all embodiments of the present disclosure, the palm identification device may sample the pixels from the palm image of each size by using a sampling interval of the size, and splice the sampled pixels according to a relative position relationship in the palm image, to obtain a slice image of each size. The sampling interval is a quantity of pixels that are spaced, including intervals of pixels in two directions: a row and a column. The size is negatively correlated with the sampling interval. A larger size indicates a smaller sampling interval. A smaller size indicates a larger sampling interval. Pixels that are not sampled in the palm image may be concentrated to a channel of an image feature.

For example, for a maximum size in the plurality of sizes, in the palm image, sampling is performed on every other column. That is, a pixel is selected every other pixel in the row direction, and the selected pixels are spliced, to obtain the slice image. Information in the spliced slice image is not lost, but size information in the palm image is concentrated on the channel, and a convolution operation is performed on an obtained new image, to obtain a downsampling feature map without information loss.

For another example, at a second largest size in the plurality of sizes, in the palm image, sampling is performed in every two columns. That is, pixels are selected every two pixels, and the selected pixels are spliced, to obtain the slice image. Information in the spliced slice image is not lost, but size information in the palm image is concentrated on the channel, and a convolution operation is performed on an obtained new image, to obtain a downsampling feature map without information loss.

For example, a size of an original image is: 640*640*3. Through the slicing operation, a feature map of 320*320*12 is obtained. 640*640 in the original image is configured for representing width*height, and 3 in the original image is configured for representing a length (also referred to as a quantity of channels) of a feature vector corresponding to each pixel.

Operation 404: Fuse, through a neck network of the palm detection model, the image features of the plurality of sizes into the fused image feature.

The image area is obtained through prediction by the palm detection model, and the palm detection model includes a neck network; and the fusing the image features of the plurality of sizes into the fused image feature includes: inputting the image features of the plurality of sizes into the neck network for feature fusion on, to obtain the fused image feature.

The neck network belongs to the palm detection model and is a structure configured for performing feature fusion on the image features of the plurality of sizes to obtain the fused image feature. The neck network is connected to the backbone network, and is configured for receiving the image features of the plurality of sizes output by the backbone network.

The image features of the plurality of sizes refer to features obtained by performing feature extraction on images of the plurality of sizes. Image features of different sizes may express different information. In the image features of the plurality of sizes, image features of larger sizes express more position information, and image features of smaller sizes express more semantic information.

For example, the palm identification device extracts features of the plurality of sizes, under different receptive fields, and in different categories, and fuses the image features of the plurality of sizes into the fused image feature corresponding to the palm image.

In all embodiments of the present disclosure, the performing, through the neck network, feature fusion on the image features of the plurality of sizes, to obtain the fused image feature includes: performing, through the neck network, fusion of the same size on the image features of the plurality of sizes, to obtain the fused image feature. The fusion of the image features of the same size may be summation or averaging.

The palm identification device fuses the image features of the plurality of sizes, which increases detection accuracy of a small target, so that an image area can be detected more accurately. In this way, the palm part image can be cropped out more accurately. This further reduces a data amount of the encrypted palm part image data, improves identity identification efficiency, and ensures security of identity identification.

In all embodiments of the present disclosure, the performing, through the neck network, feature fusion on the image features of the plurality of sizes, to obtain the fused image feature includes: inputting the image features into the neck network, converting the image features using convolution into first intermediate features having a plurality of sizes, converting the first intermediate features using convolution into second intermediate features having a plurality of sizes, fusing the second intermediate features into the fused image feature. For example, the feature fusion through the neck network may include: performing, through the neck network, feature fusion based on the image features of the plurality of sizes, to obtain first intermediate features of the plurality of sizes; performing, through the neck network, feature fusion for the plurality of sizes based on the first intermediate features having the plurality of sizes, to obtain second intermediate features having the plurality of sizes; and performing, through the neck network, feature fusion on the second intermediate features of the plurality of sizes, to obtain the fused image feature.

The feature fusion for the plurality of sizes refers to performing feature fusion for different sizes respectively. The first intermediate features of the plurality of sizes may be in a one-to-one correspondence with the image features of the plurality of sizes. The first intermediate features of the plurality of sizes may be in a one-to-one correspondence with the second intermediate features of the plurality of sizes. The image features of the plurality of sizes may be consistent with the first intermediate features of the plurality of sizes. The first intermediate features of the plurality of sizes may be consistent with the second intermediate features of the plurality of sizes. The performing feature fusion on the second intermediate features of the plurality of sizes may be fusing, of the same size, the second intermediate features of the plurality of sizes. The fusion may be summation or averaging.

In all embodiments of the present disclosure, features of different sizes are fused and are finally fused into the fused image feature, which can fully express detailed features in the palm image, so that an image area is detected more accurately. In this way, the palm part image can be extracted more accurately. This further reduces a data amount of the encrypted palm part image data, improves identity identification efficiency, and ensures security of identity identification.

In all embodiments, the converting using convolution the image features into the first intermediate features includes: converting, through at least one convolution, an image feature having a minimum size in the image features into an initial first intermediate feature which serves as a first intermediate feature having a minimum size of the first intermediate features, and upsampling a first intermediate feature and fusing a result of the upsampling with an image feature having a corresponding size in the image features to obtain another first intermediate feature which serves as one of the first intermediate features having the plurality of sizes. Each of the first intermediate features other than the initial first intermediate feature is obtained through the upsampling and fusing operation using a first intermediate feature obtained through a previous upsampling and fusing operation. In all embodiments of the present disclosure, the plurality of sizes are N sizes, N is a positive integer greater than 1, and the extracting, based on the image features of the plurality of sizes, first intermediate features of the plurality of sizes includes: determining, based on an image feature ranking first in a positive order of size, a first intermediate feature ranking first in the positive order of size; upsampling layer by layer starting from the first intermediate feature ranking first in the positive order of size, and fusing a result of upsampling a first intermediate feature ranking $n^{th}$ in the positive order of size with an image feature ranking $(n+1)^{th}$ in the positive order of size, to obtain a first intermediate feature ranking $(n+1)^{th}$ in the positive order of size; and determining, when obtaining a first intermediate feature at an $N^{th}$ layer, the first intermediate features of the plurality of sizes from a first layer to the $N^{th}$ layer. n is a positive integer from 1 to N-1; and the positive order of size is in ascending order of size.

The ascending order is referred to as the positive order, and the positive order of size is in ascending order of size. Upsampling is a process of increasing the size. The upsampling may use a size at a next layer as a target, and adjacent feature elements in a feature at each layer are interpolated, to obtain a feature at the next layer.

In all embodiments of the present disclosure, the determining, based on an image feature ranking first in a positive order of size, a first intermediate feature ranking first in the positive order of size includes: performing at least one time of convolution on the image feature ranking first in the positive order of size, to obtain the first intermediate feature ranking first in the positive order of size. In addition to performing convolution, channel adjustment may be further performed. A quantity of channels of the first intermediate features that are obtained after the channel adjustment is performed may be consistent.

In all embodiments of the present disclosure, a size of a result of upsampling the first intermediate feature ranking $n^{th}$ in the positive order of size may be the same as a size of an image feature ranking $(n+1)^{th}$ in the positive order of size. The result of upsampling the first intermediate feature ranking $n^{th}$ in the positive order of size and the image feature ranking $(n+1)^{th}$ in the positive order of size are fused, and the two may be spliced, or summation or averaging may be performed on the two of the same size.

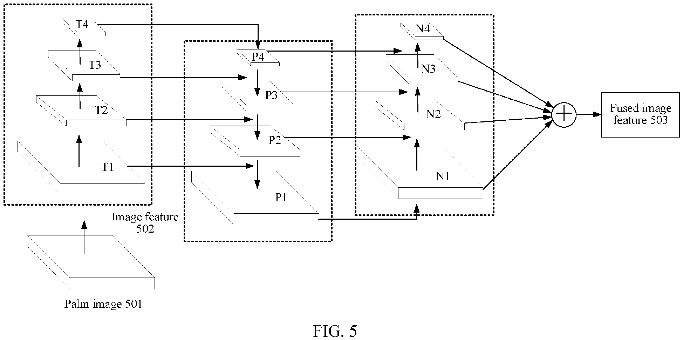

For example, FIG. 5 is a schematic diagram of image feature fusion. A palm identification device performs feature extraction on a palm image 501, to obtain image features 502 of a plurality of sizes corresponding to the palm image 501. The image features 502 include a feature layer T1, a feature layer T2, a feature layer T3, and a feature layer T4. After the image feature 502 is obtained, one time of convolution is performed on the feature layer T4 and channel adjustment is performed to obtain a feature layer P4. The feature layer P4 is upsampled and is combined with the feature layer T3, and then convolution is performed and channel adjustment is performed to obtain a feature layer P3. The feature layer P3 is upsampled and is combined with the feature layer T2, and then convolution is performed and channel adjustment is performed to obtain a feature layer P2. The feature layer P2 is upsampled and is combined with the feature layer T1, and then 1*1 convolution is performed and channel adjustment is performed to obtain a feature layer P1.

In all embodiments of the present disclosure, the plurality of sizes are N sizes, N is a positive integer greater than 1, and the performing feature fusion of the plurality of sizes based on the first intermediate features of the plurality of sizes, to obtain second intermediate features of the plurality of sizes includes: determining, based on a first intermediate feature ranking first in a reverse order of size, a second intermediate feature ranking first in the reverse order of size; downsampling layer by layer starting from the second intermediate feature ranking first in the reverse order of size, and fusing a result of downsampling a second intermediate feature ranking $m^{th}$ in the reverse order of size with a first intermediate feature ranking $(m+1)^{th}$ in the reverse order of size, to obtain a second intermediate feature ranking $(n+1)^{th}$ in the reverse order of size, where m is an integer from 1 to N-1; and the reverse order of size is in descending order of size; and determining, when obtaining the first intermediate feature at the $N^{th}$ layer, the first intermediate features of the plurality of sizes from the first layer to the $N^{th}$ layer.

The descending order is referred to as the reverse order, and the reverse order of size is in descending order of size. Downsampling is a process of reducing a size. The downsampling may use a size at a next layer as a target, and feature elements in a feature at each layer are used at intervals, to obtain a feature at the next layer. The first intermediate feature may be referred to as a semantic image feature. The second intermediate feature may be referred to as a position image feature. The semantic image features represent more semantic information, and the semantic image features represent more position information.

In all embodiments, the converting using convolution the first intermediate features into the second intermediate features includes: converting, through at least one convolution, a first intermediate feature having a maximum size in the first intermediate features into an initial second intermediate feature which serves as a second intermediate feature having a maximum size of the second intermediate features, and downsampling a second intermediate feature and fusing a result of the downsampling with a first intermediate feature having a corresponding size in the first intermediate features to obtain another second intermediate feature which serves as one of the second intermediate features having the plurality of sizes. Each of the second intermediate features other than the initial second intermediate feature is obtained through the downsampling and fusing operation using a second intermediate feature obtained through a previous downsampling and fusing operation. In all embodiments of the present disclosure, the determining, based on a first intermediate feature ranking first in a reverse order of size, a second intermediate feature ranking first in the reverse order of size includes: performing at least one time of convolution on the first intermediate feature ranking first in the reverse order of size, to obtain the second intermediate feature ranking first in the reverse order of size. In addition to performing convolution, channel adjustment may be further performed. A quantity of channels of the first intermediate features after the channel adjustment is performed may be consistent.

A size of a result of downsampling the second intermediate feature ranking $m^{th}$ in the reverse order of size may be consistent with a size of a first intermediate feature ranking $(m+1)^{th}$ in the reverse order of size. The result of downsampling the second intermediate feature ranking $m^{th}$ in the reverse order of size and the first intermediate feature ranking $(m+1)^{th}$ in the reverse order of size are fused, and the two may be spliced, or summation or averaging may be performed on the two of the same size.

For example, the palm identification device may perform one time of convolution on the feature layer P1 and perform channel adjustment to obtain a feature layer N1. The feature layer N1 is downsampled and is combined with the feature layer P2, and then convolution is performed and channel adjustment is performed to obtain a feature layer N2. The feature layer N2 is downsampled and is combined with the feature layer P3, and then convolution is performed and channel adjustment is performed to obtain a feature layer N3. The feature layer N3 is downsampled and is combined with the feature layer P4, and then convolution is performed and channel adjustment is performed to obtain a feature layer N4. The palm identification device fuses features at a feature layer N1-4, to obtain a fused image feature 503.

In all embodiments of the present disclosure, an activation function in the convolution is a logistic activation function.

In all embodiments of the present disclosure, the palm identification device upsamples the image features of the plurality of sizes in ascending order of size, to obtain the first intermediate feature; the palm identification device downsamples the image features of the plurality of sizes in descending order of size, to obtain the second intermediate feature; and the palm identification device performs feature fusion on the first intermediate feature and the second intermediate feature, to obtain the fused image feature.

Operation 406: Determine, through a prediction network of the palm detection model based on the fused image feature, an image area defining a palm in the palm image.

The image area is an identifier representing a position of the palm in the palm image.

In all embodiments of the present disclosure, the image area is determined by the palm detection model, and the palm detection model includes a prediction network; and the determining, based on the fused image feature, the image area defining the palm in the palm image includes: dividing the fused image feature into a plurality of grids; and inputting the plurality of grids into the prediction network, and identifying the image area using the prediction network.

Each grid, also referred to as grid feature, is a gridded fused image feature obtained by dividing the fused image feature into grids. For example, the palm identification device performs grid division on the fused image feature, to obtain the plurality of grid features. The palm identification device separately performs prediction based on each grid feature through the prediction network, to obtain a prediction result corresponding to each grid feature. Further, the palm identification device may determine the position of the image area in the palm image based on the prediction results respectively corresponding to the plurality of grid features.

In all embodiments of the present disclosure, the palm identification device is equipped with an infrared camera, and the palm image processing method further includes: obtaining an infrared image of the palm captured by an infrared camera, i.e., obtaining an infrared image collected of the same palm as in the palm image, where the infrared image is an image of the palm obtained by the infrared camera using infrared light; identifying a palm area in the infrared image which is referred to as an infrared image area defining the palm; and the procedure of extracting the image area from the palm image as the palm part image includes: determining an overlapping area of the image area in the palm image and the infrared image area in the infrared image; and extracting the overlapping area from the palm image as the palm part image.

In all embodiments of the present disclosure, the palm identification device is further equipped with the infrared camera. The palm identification device obtains an infrared image corresponding to the same physical palm. The palm identification device performs area identification on the infrared image, to determine the palm area in the infrared image. The infrared image is an image obtained by the infrared camera imaging, based on infrared light, the palm.

In all embodiments of the present disclosure, the procedure of identifying the infrared image area from the infrared image includes: detecting a point identifying a gap between fingers in the infrared image; and determining the infrared image area in the infrared image based on the point.

For example, the palm identification device detects the finger gap point in the infrared image, and determines the palm area in the infrared image based on the finger gap point.

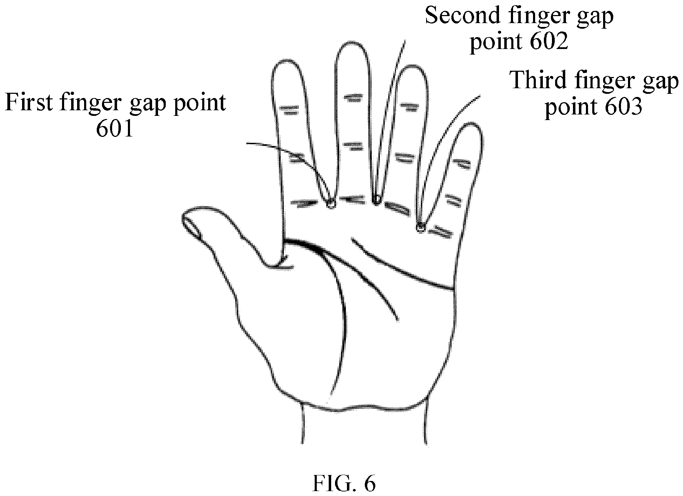

FIG. 6 is a schematic diagram of a finger gap point in a palm. The finger gap point is a first finger gap point 601 between an index finger and a middle finger, or the finger gap point is a second finger gap point 602 between the middle finger and a ring finger, or the finger gap point is a third finger gap point 603 between the ring finger and a little finger.

Because a palm area in a palm image may exist in any area in the palm image, to determine a position of the palm area in the palm image, finger gap point detection is performed on the palm image, to obtain at least one finger gap point in the palm image, so that the palm area can be determined subsequently according to the at least one finger gap point.

Operation 408: Extract a palm part image from the palm image based on the image area.

The palm part image is an effective area for identification in the palm image, or the palm part image is an area in the palm image in which the palm is located, or the palm part image is an area in the palm image that can be configured for palm identification.

In all embodiments of the present disclosure, the palm identification device obtains at least three finger gap points in the infrared image; the finger gap points are sequentially connected, to obtain a finger gap point connecting line; and the palm identification device crops the infrared image based on the finger gap point connecting line to obtain the palm area.

In all embodiments of the present disclosure, the determining an overlapping area of the image area in the palm image and the infrared image area in the infrared image includes: obtaining coordinates of the image area in the palm image, and obtaining coordinates of the infrared image area in the infrared image; and determining the overlapping area of the image area and the palm area based on the coordinates of the image area and the coordinates of the infrared image area.

The palm identification device obtains the coordinate parameter of the image area in the palm image, and obtains the coordinate parameter of the infrared image area in the infrared image; and the palm identification device obtains the palm part image corresponding to the palm by cropping the palm image based on the overlapping area identified using the coordinate parameter of the image area and the coordinate parameter of the infrared image area.

Operation 410: Encrypting the palm part image into encrypted palm part image data, where the encrypted palm part image data is for being transmitted to a server, and the server performs identity identification based on the encrypted palm part image data.

The encrypted palm part image data is configured for being transmitted to the palm identification server for decryption and palm comparison and identification, to obtain the user identifier corresponding to the palm image. The palm comparison and identification refers to comparing and identifying the palm feature in the palm part image with a preset palm feature in the database.

As one of biological features, the palm has biological uniqueness and distinction. Compared with facial identification, which is currently widely applied to fields such as identity verification, payment, access control, and bus riding, the palm is not affected by makeup, a mask, ink glasses, and the like, which can improve accuracy of user identity verification. In some scenarios, such as a pandemic prevention and control scenario, a mask needs to be worn to cover the mouth and the nose. In this case, performing identity verification by using a palm image may be a better option.

Cross-device registration identification is a capability that is very important for user experience. For two types of associated devices, a user may register in a device of one type, a user identifier of the user is bound with a palm feature of the user, and then the user may perform identity verification on a device of the other type. Because a mobile phone and an internet of things device have a large difference in image style and image quality, the user can directly perform, through cross-device registration and identification, identity verification on the internet of things device end after performing registration on the mobile phone end, and the user does not need to perform registration on the two types of devices. For example, after perform registration on the mobile phone end, the user can directly perform identity verification on a device in a store, and does not need to perform registration on the device in the store, to avoid information leaking of the user.

In summary, according to the method provided in all embodiments of the present disclosure, the image features of the plurality of sizes corresponding to the palm image are obtained by obtaining the palm image and performing feature extraction; feature fusion is performed on the image features of the plurality of sizes, to obtain the fused image feature; prediction is performed based on the fused image feature, to obtain the image area corresponding to the palm in the palm image; the palm part image corresponding to the palm is obtained by cropping the palm image based on the image area; and image encryption is performed on the palm part image, to obtain the encrypted palm part image data, and the encrypted palm part image data is transmitted to the palm identification server for decryption and palm comparison and identification, to obtain a user identifier corresponding to the palm image. In this application, the palm part image corresponding to the palm is obtained by cropping the palm image, and image encryption, transmission, and decryption are performed only on the palm part image. This reduces time of recognizing the palm image and improves identification efficiency of palm identification.

According to the method provided in all embodiments of the present disclosure, the slicing operation is performed on the palm image through the backbone network and feature extraction is performed, to obtain the image features of the plurality of sizes. Based on the foregoing method, features of the plurality of sizes, under different receptive fields, and in different categories are obtained. This improves accuracy of prediction of the image area.

According to the method provided in all embodiments of the present disclosure, the image features of the plurality of sizes are upsampled through the neck network in ascending order of size, to obtain the first intermediate feature; the image features of the plurality of sizes are downsampled in descending order of size, to obtain the second intermediate feature; and feature fusion is performed on the first intermediate feature and the second intermediate feature, to obtain the fused image feature. Based on the foregoing method, the image features of the plurality of sizes can be fused. This increases accuracy of detecting a small target in the palm image.

According to the method provided in all embodiments of the present disclosure, a gridded fused image feature is obtained by performing grid division on the fused image feature. Through the prediction network, prediction is performed based on the gridded fused image feature, to obtain the image area. Based on the foregoing method, accuracy of prediction of the image area is improved, and security of identity identification is further ensured based on the palm.

According to the method provided in all embodiments of the present disclosure, an infrared image corresponding to a same palm is obtained, area identification is performed on the infrared image, to determine a palm area in the infrared image, and based on the overlapping area between the image area and the palm area in the infrared image, a palm part image corresponding to the palm is obtained by cropping the palm image. Based on the foregoing method, through the palm area in the infrared image and the image area, a palm part image corresponding to the palm is jointly obtained, so that accuracy of cropping the palm part image is improved, and the obtained palm part image is more accurate.

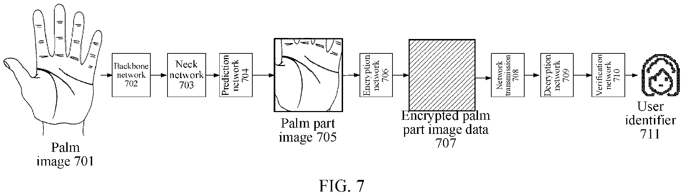

FIG. 7 is a schematic diagram of a palm image processing method according to an exemplary embodiment of this application. The method is performed by a palm identification device. The method includes:

obtaining, by the palm identification device, a palm image 701 corresponding to a palm, and inputting, by the palm identification device, the obtained palm image 701 into a backbone network 702 for feature extraction, to obtain image features of a plurality of sizes corresponding to the palm image 701.

The palm identification device performs, through a neck network 703, feature fusion on the image features of the plurality of sizes, to obtain a fused image feature.

The palm identification device performs prediction through a prediction network 704 based on the fused image feature, to obtain an image area corresponding to a palm in the palm image 701. The palm identification device obtains a palm part image 705 corresponding to the palm by cropping the palm image 701 based on the image area.

The palm identification device inputs the palm part image 705 into an encryption network 706 for image encryption, to obtain encrypted palm part image data 707.

The palm identification device transmits the encrypted palm part image data 707 through a network 708 to a decryption network 709 in a palm identification server for image decryption and performs palm comparison and identification through a verification network 710, to obtain a user identifier 711 corresponding to the palm image 701.

In summary, according to the method provided in all embodiments of the present disclosure, the palm part image corresponding to the palm is obtained by cropping the palm image, and image encryption, transmission, and decryption are performed only on the palm part image. This reduces time of recognizing the palm image and improves identification efficiency of palm identification.

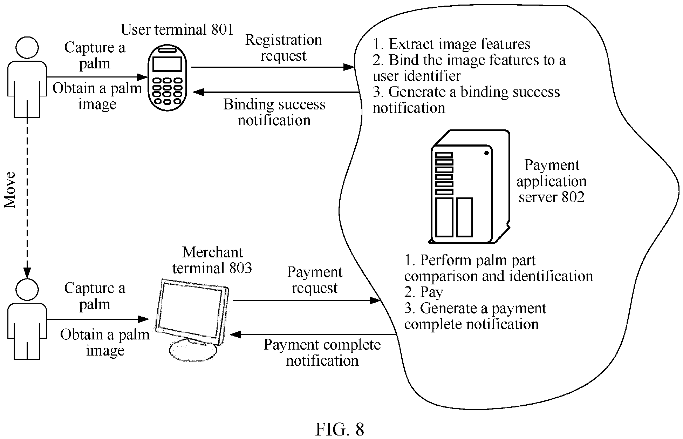

FIG. 8 is a schematic diagram of cross-device payment based on a palm image processing method according to an exemplary embodiment of this application. The method relates to a user terminal 801, a merchant terminal 803, and a payment application server 802.

A payment application is installed in the user terminal 801. The user terminal 801 logs in to the payment application based on a user identifier, and establishes a communication connection with the payment application server 802. Through the communication connection, the user terminal 801 may interact with the payment application server 802. The payment application is installed in the merchant terminal 803. The merchant terminal 803 logs in to the payment application based on a merchant identifier, and establishes a communication connection with the payment application server 802. Through the communication connection, the merchant terminal 803 may interact with the payment application server 802.

A cross-device payment procedure includes the following.

1. A user holds the user terminal 801 at home, captures a physical palm of the user through the user terminal 801, to obtain a palm image of the user, logs in to the payment application based on the user identifier, and transmits a palm image registration request to the payment application server 802, where the palm image registration request carries the user identifier and the palm image.

2. The payment application server 802 receives the palm image registration request transmitted by the user terminal 801, performs feature extraction on the palm image, to obtain a palm feature of the palm image, stores the palm feature and the user identifier in correspondence, and transmits a palm image binding success notification to the user terminal 801.

After storing the palm feature and the user identifier in correspondence, the payment application server 802 uses the palm feature as a preset palm feature, and may subsequently determine a corresponding user identifier by using the stored preset palm feature.

3. The user terminal 801 receives the palm image binding success notification, displays the palm image binding success notification, and prompts the user that the palm image is bound to the user identifier.

The user completes registration of the palm image through interaction between the user terminal 801 of the user and the payment application server 802, and may subsequently implement automatic payment through the palm image.

4. When the user purchases goods in a store to perform a transaction, the merchant terminal 803 captures the physical palm of the user, to obtain the palm image, and based on the payment application that the merchant identifier logs in to, transmits a payment request to the payment application server 802, where the payment request carries the merchant identifier, a consumption amount, and the palm image.

5. After receiving the payment request, the payment application server 802 performs palm comparison and identification on the palm image, determines the user identifier of the palm image, determines an account of the user identifier in the payment application, completes transfer through the account, and transmits a payment completion notification to the merchant terminal 803 after the transfer is completed.

After the user performs palm image registration by using the user terminal 801, the user can directly perform payment through the palm on the merchant terminal 803, and the user does not need to perform palm image registration on the merchant terminal 803. This implements an effect of cross-device palm image identification, and improves convenience.

6. The merchant terminal 803 receives the payment completion notification, displays the payment completion notification, and prompts the user that payment is completed, so that the user completes a transaction with the merchant for an item, and the user can bring the item away.

In addition, in the foregoing embodiment, the cross-device payment process is implemented through the user terminal 801 and the merchant terminal 803. The merchant terminal 803 may be further replaced with a payment device on a bus, and a cross-device bus riding payment solution is implemented according to the foregoing operations.

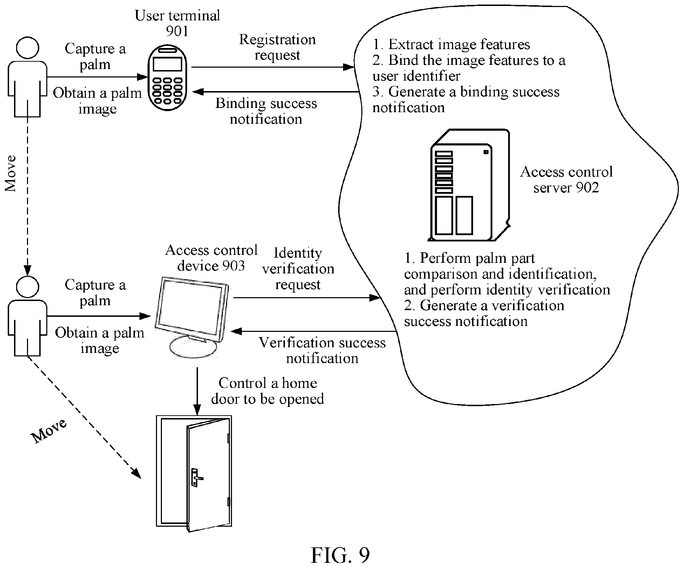

FIG. 9 is a schematic diagram of cross-device identity verification based on a palm image processing method according to an exemplary embodiment of this application. The method relates to a user terminal 901, an access control device 903, and an access control server 902.

The user terminal 901 establishes a communication connection with the access control server 902. Through the communication connection, the user terminal 901 can interact with the access control server 902. The access control device 903 establishes a communication connection with the access control server 902. Through the communication connection, the access control device 903 can interact with the access control server 902.

A cross-device identity verification procedure includes the following.

1. A user holds the user terminal 901 at home, captures a physical palm of the user through the user terminal 901, to obtain a palm image of the user, and transmits a palm registration request to the access control server 902, where the palm registration request carries a user identifier and the palm image.

2. The access control server 902 receives the palm registration request transmitted by the user terminal 901, performs feature extraction on the palm image, to obtain a palm feature of the palm image, stores the palm feature and the user identifier in correspondence, and transmits a palm binding success notification to the user terminal 901.

After storing the palm feature and the user identifier in correspondence, the access control server 902 may use the palm feature as a preset palm feature, and may subsequently determine a corresponding user identifier by using the stored preset palm feature.

3. The user terminal 901 receives the palm binding success notification, displays the palm binding success notification, and prompts the user that the palm image is bound to the user identifier.

The user completes registration of the palm image through interaction between the user terminal 901 of the user and the access control server, and may subsequently implement automatic door opening through the palm image.

4. When the user comes home from the outside, the access control device 903 captures the physical palm of the user, to obtain the palm image of the user, and transmits an identity verification request to the access control server 902, where the identity verification request carries the verification palm image.

5. The access control server 902 receives the identity verification request transmitted by the access control device 903, recognizes the verification palm image, to obtain the user identifier of the palm image, determines that the user is a registered user, and transmits a verification success notification to the access control device 903.

6. The access control device 903 receives the verification success notification transmitted by the access control server 902, and controls, based on the verification success notification, a home door to be opened, so that the user can enter the room.

The foregoing embodiment implements the cross-device identity verification process through the user terminal 901 and the access control device 903.

It may be learned from the foregoing cross-device identity verification scenario that whether in a palm registration stage of interaction between the user terminal 901 and the access control server 902, or in a palm image processing stage of interaction between the another terminal device and the server, after obtaining the palm image, the user terminal 901 or the another terminal device extracts and encrypts an area in which the palm is located in the palm image, transmits the palm image of the area in which the palm is located to the server, so that the server performs palm comparison and identification. In addition, in the palm comparison and identification stage, the access control server 902 compares the palm feature with the preset palm feature, to obtain an identification result of a current user.

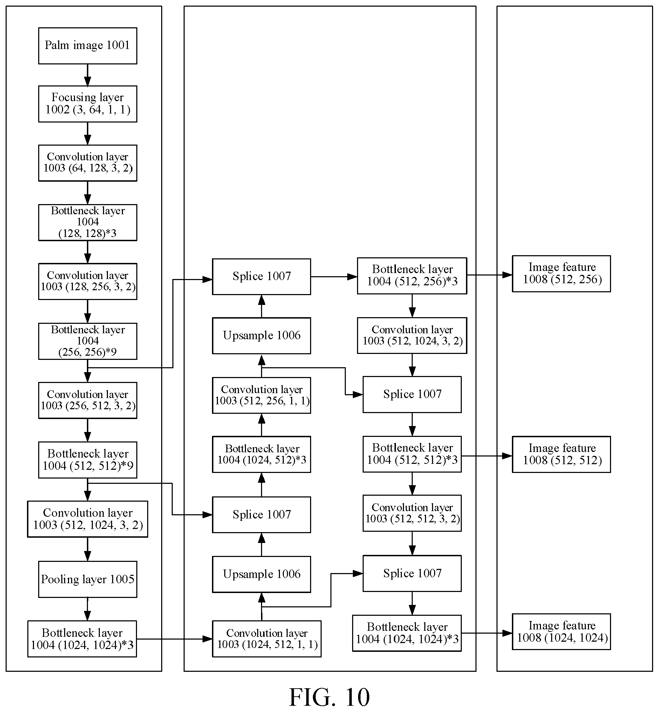

FIG. 10 is a schematic diagram of a palm image processing method according to an exemplary embodiment of this application. The method is performed by a palm identification device. The method includes:
obtaining, by the palm identification device, a palm image 1001 corresponding to a palm, inputting the palm image 1001 into a focusing layer 1002 in a backbone network, and performing, by the focusing layer 1002, a slicing operation on the palm image 1001, to obtain image features of a plurality of sizes. The image features are input into a convolution layer 1003 for convolution and channel adjustment, and then are input into a bottleneck layer 1004 for feature extraction. A pooling layer 1005 is configured to pool the image features.

For example, the palm image 1001 is input into the focusing layer 1002, and the focusing layer 1002 performs a slicing operation on the palm image 1001, to obtain the image features of the plurality of sizes that are represented as (3, 64, 1, 1). The image features obtained by performing convolution and channel adjustment at the convolution layer 1003 are represented as (64, 128, 3, 2). After passing through the bottleneck layer 1004, the image features are represented as (128, 128)*3. The image features obtained by performing convolution and channel adjustment at the convolution layer 1003 are represented as (128, 256, 3, 2). The image features obtained by passing through the bottleneck layer 1004 are represented as (256, 256)*3. The image features (256, 256)*3 obtained by performing convolution and channel adjustment at the convolution layer 1003 are represented as (256, 512, 3, 2). The image features obtained by passing through the bottleneck layer 1004 are represented as (512, 512)*9. The image features obtained by performing convolution and channel adjustment at the convolution layer 1003 again are represented as (512, 1024, 3, 2). The image features obtained by pooling the image at the pooling layer 1005 and passing through the bottleneck layer 1004 are represented as (1024, 1024)*3. After the image features (1024, 1024)*3 are upsampled 1006 and spliced 1007 with the image features (512, 512)*9, the image features obtained by passing through the bottleneck layer 1004 are represented as (1024, 512)*3. The image features (1024, 512)*3 obtained by performing convolution and channel adjustment at the convolution layer 1003 are represented as (512, 256, 1, 1). After the image features (512, 256, 1, 1) are upsampled 1006 and spliced 1007 with the image features (256, 512, 3, 2), the image features obtained by passing through the bottleneck layer 1004 are represented as (512, 256)*3. The image features (512, 256)*3 obtained by performing convolution and channel adjustment at the convolution layer 1003 are represented as (256, 256, 3, 2). After the image features (256, 256, 3, 2) are spliced 1007 with the image features (512, 256, 1, 1), the image features obtained by passing through the bottleneck layer 1004 are represented as (512, 512)*3. The image features (512, 512)*3 obtained by performing convolution and channel adjustment at the convolution layer 1003 are represented as (512, 512, 3, 2). After the image features (512, 512, 3, 2) are spliced 1007 with the image features represented as (1024, 512, 1, 1), the image features obtained by passing through the bottleneck layer 1004 are represented as (1024, 1024)*3. The final output image features 1008 of the plurality of sizes are: (512, 256), (512, 512), and (1024, 1024). (x, y, a, b), where x and y may respectively represent two dimensions of a feature matrix, and a and b may respectively represent a quantity of channels and a size. (x, y)*b, where x and y may respectively represent two dimensions of the feature matrix, and b may represent the quantity of channels. (x, y), where x and y may respectively represent two dimensions of the feature matrix.

The palm identification device performs feature fusion on the image features 1008 of the plurality of sizes, to obtain a fused image feature. The palm identification device performs prediction based on the fused image feature, to obtain a image area corresponding to a palm in the palm image 1001. The palm identification device obtains a palm part image corresponding to the palm by cropping the palm image 1001 based on the image area. The palm identification device performs image encryption on the palm part image, and transmits the palm part image to the palm identification server through the network for image decryption and palm comparison and identification, to obtain a user identifier corresponding to the palm image 1001.

In summary, according to the method provided in all embodiments of the present disclosure, the slicing operation is performed on the palm image through the backbone network and feature extraction is performed, to obtain the image features of the plurality of sizes. Based on the foregoing method, features of the plurality of sizes, under different receptive fields, and in different categories are obtained. This improves accuracy of prediction of the image area.

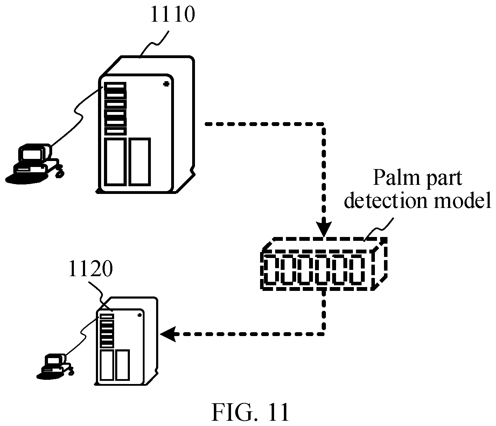

The prediction of the image area related in this application may be implemented based on a palm detection model. The solution includes a palm detection model generation stage and an image area prediction stage. FIG. 11 is a boxwork diagram of a palm detection model generation stage and an image area prediction stage according to an exemplary embodiment of this application. As shown in FIG. 11, in the palm detection model generation stage, after obtaining a palm detection model by using a preset training sample dataset (including a sample palm image and a sample palm part image), a palm detection model generation device 1110 generates an image area based on the palm detection model. In the image area prediction stage, the image area prediction processing device 1120 processes the input palm image based on the palm detection model, to obtain a prediction result of the palm image, for example, determines an area and a position of a palm in the palm image.

The foregoing palm detection model generation device 1110 and the image area prediction processing device 1120 may be computer devices. For example, the computer devices may be fixed computer devices such as a personal computer or a server, or the computer devices may also be mobile computer devices such as a tablet computer or an e-book reader.

In all embodiments of the present disclosure, the palm detection model generation device 1110 and the image area prediction processing device 1120 may be the same device, or the palm detection model generation device 1110 and the image area prediction processing device 1120 may be different devices. In addition, when the palm detection model generation device 1110 and the image area prediction processing device 1120 are different devices, the palm detection model generation device 1110 and the image area prediction processing device 1120 may be the same type of devices. For example, both the palm detection model generation device 1110 and the image area prediction processing device 1120 may be servers. Alternatively, the palm detection model generation device 1110 and the image area prediction processing device 1120 may be different types of devices. For example, the image area prediction processing device 1120 may be a personal computer or a terminal, and the palm detection model generation device 1110 may be a server or the like. Specific types of the palm detection model generation device 1110 and the image area prediction processing device 1120 are not limited in the embodiments of this application.

The foregoing embodiments describe the palm image processing method, and the following describes a method for training a palm detection model.

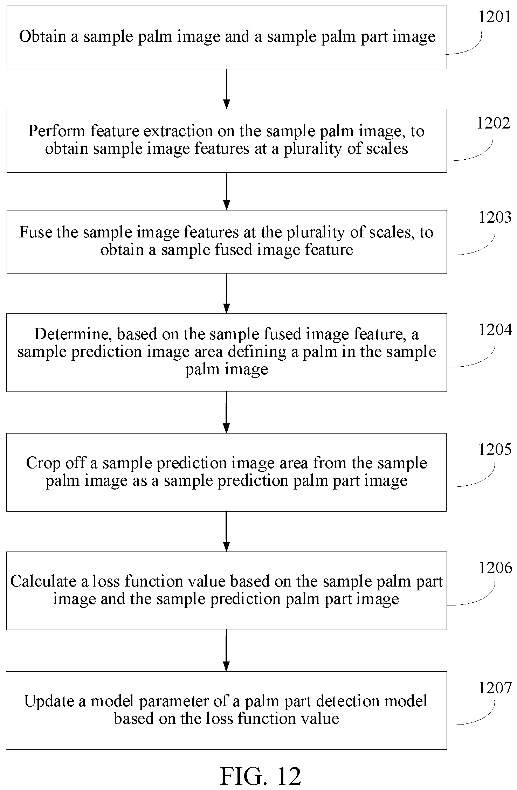

FIG. 12 is a flowchart of a method for training a palm detection model according to an exemplary embodiment of this application. The method is performed by a palm identification device. The method includes the following operations.

Operation 1201: Obtain a sample palm image and a sample palm part image.

The sample palm image is an image of a to-be-determined user identifier. The sample palm image includes a palm. The palm is an image of a physical palm of a user whose identity is to be verified. The sample palm image may further include other information, such as fingers of the user, a scene in which the palm of the user is captured, and the like. The sample palm image may be obtained by capturing, by the palm identification device, a physical palm of a user whose identity is to be verified, or may be transmitted by another device.

For example, the palm identification device is a cash register device in a store, and the cash register device in the store captures a physical palm of a user through a camera, to obtain the sample palm image. Alternatively, the palm identification device is a palm image identification server, and after capturing a sample palm image of a user, a cash register device in a store transmits the sample palm image to the palm image identification server.

The sample palm part image is an effective identification area labeled in the sample palm image, or the sample palm part image is an area in the sample palm image in which the labeled palm is located, or the sample palm part image is an area in the sample palm image that is labeled and that can be configured for identification.

Operation 1202: Perform feature extraction on the sample palm image, to obtain sample image features of a plurality of sizes.

The sample palm image is an image obtained by capturing a physical palm. The sample palm image includes an image of all or a part of the physical palm. For ease of description, an image of the physical palm in the sample palm image is referred to as a palm subsequently. The palm included in the sample palm image may be a physical palm of a user whose identity identification is to be performed. The palm in the sample palm image includes at least a palm, may further include the fingers or a part of the arm, and may further include an image of an environment in which the physical palm is located when the physical palm is captured.

A size is a size of a sample image feature, and may be represented by a matrix dimension number, such as 100\*100, 80\*80, 60\*60, or 40\*40. The plurality of sizes refer to two or more sizes, and each size is different. A maximum size in the plurality of sizes may be the same as a size of the sample palm image, and is generally smaller than the size of the sample palm image.

The sample palm image may be obtained by capturing, by the palm identification device, a physical palm of a user whose identity is to be verified, or may be transmitted by another device. The palm identification device may directly collect an image of the physical palm, to obtain the sample palm image. The palm identification device may also collect the image of the physical palm through an image collector connected to the sample palm image, to obtain the sample palm image. The palm identification device can perform feature extraction on the obtained sample palm image, to obtain sample image features of a plurality of sizes corresponding to the sample palm image.

For example, the palm identification device is a cash register device in a store, and the cash register device in the store captures a physical palm of a user through a camera, to obtain the sample palm image. Alternatively, the palm identification device is a sample palm image identification server, and after capturing a sample palm image of a user, a cash register device in a store transmits the sample palm image to the sample palm image identification server.

For example, the sample image features of the plurality of sizes may be respectively extracted from low-resolution images of the plurality of sizes by downsampling a high-resolution sample palm image into the low-resolution images of the plurality of sizes. The high resolution and the low resolution are relative concepts, and the high resolution is a resolution higher than the low resolution.

For example, a size of the input sample palm image is 640\*640, and sizes of the output sample image features of the plurality of sizes are: 80\*80, 40\*40, and 20\*20.

Operation 1203: Fuse the sample image features of the plurality of sizes, to obtain a sample fused image feature.

The palm identification device may perform feature fusion on the sample image features of the plurality of sizes, to obtain a sample fused image feature.

The sample image features of the plurality of sizes refer to features obtained by performing feature extraction on images of the plurality of sizes. Sample image features at different sizes may express different information. In the sample image features of the plurality of sizes, sample image features of larger sizes express more position information, and sample image features of smaller sizes express more semantic information.

For example, the palm identification device extracts features of the plurality of sizes, under different receptive fields, and in different categories, and fuses the sample image features of the plurality of sizes, to obtain the sample fused image feature corresponding to the sample palm image.

Operation 1204: Determine, based on the sample fused image feature, a sample prediction image area defining a palm in the sample palm image.

The sample prediction image area is an identifier configured for representing a position of the palm in the sample palm image. The sample prediction image area includes the palm in the sample palm image. A boundary of the sample prediction image area encloses the palm in the sample palm image.

In all embodiments of the present disclosure, a shape of the sample prediction image area may be a regular shape, for example, may be at least one of a rectangle, a square, a rhombus, a hexagon, a circle, or a triangle. The shape of the sample prediction image area may alternatively be an irregular shape. The regular shape is a shape that can be drawn by using a fixed parameter and based on a fixed rule. The irregular shape cannot be drawn by using the fixed parameter and based on the fixed rule, and can generally only be represented by a set of points that constitute the irregular shape.

The palm identification device can perform prediction based on the sample fused image feature by using artificial intelligence, to determine the sample prediction image area defining the palm in the sample palm image.

In all embodiments of the present disclosure, a computer device can determine, based on the sample fused image feature, the position of the sample prediction image area in the sample palm image that identifies the palm in the sample palm image. When the sample prediction image area is of the regular shape, the position may be represented by a value of the fixed parameter required for drawing the regular shape, for example, may be represented by a position of a fixed point of the sample prediction image area and a size parameter of the sample prediction image area. The fixed point is a point whose position is fixed relative to the sample prediction image area. The size parameter is a parameter representing a size of the sample prediction image area. For example, when the sample prediction image area is of the rectangle shape, the fixed point may be any corner point or a center point of the rectangle, and the size parameter is a side length of an adjacent side of the sample prediction image area.

Operation 1205: Extract a sample prediction palm part image from the sample palm image based on the sample prediction image area.

The sample prediction palm part image is an effective identification area in the sample palm image, or the sample prediction palm part image is an area in the sample palm image in which the palm is located, or the sample prediction palm part image is an area in the sample palm image that can be configured for palm identification.

For example, the palm identification device removes, based on the position of the sample prediction image area, an image area located outside the sample prediction image area in the sample palm image, and uses a remaining image as the sample prediction palm part image.

Operation 1206: Calculate a loss function value based on the sample palm part image and the sample prediction palm part image.

For example, the palm identification device calculates the loss function value based on the sample palm part image and the sample prediction palm part image.

Operation 1207: Update a model parameter of the palm detection model based on the loss function value.

For example, the palm identification device updates the model parameter of the palm detection model based on the loss function value.

Updating of the model parameter refers to updating a network parameter in the palm detection model, or updating a network parameter of each network module in the model, or updating a network parameter of each network layer in the model, but is not limited thereto. This is not limited in the embodiments of this application.

The model parameter of the palm detection model includes at least one of a network parameter of a backbone network, a network parameter of a neck network, and a network parameter of a prediction network in the palm detection model.

In summary, according to the method provided in all embodiments of the present disclosure, the sample image features of the plurality of sizes corresponding to the sample palm image are obtained by performing feature extraction on the sample palm image; feature fusion is performed on the sample image features of the plurality of sizes, to obtain the sample fused image feature; prediction is performed based on the sample fused image feature, to obtain the sample prediction image area defining the palm in the sample palm image; the sample palm image is cropped based on the sample prediction image area to obtain the sample prediction palm part image corresponding to the palm; a loss function value is calculated based on the sample prediction palm part image and the sample prediction palm part image; and the model parameter of the palm detection model is updated based on the loss function value, so that the trained palm detection model can have higher prediction accuracy of the sample prediction image area, to obtain a more accurate sample prediction image area.

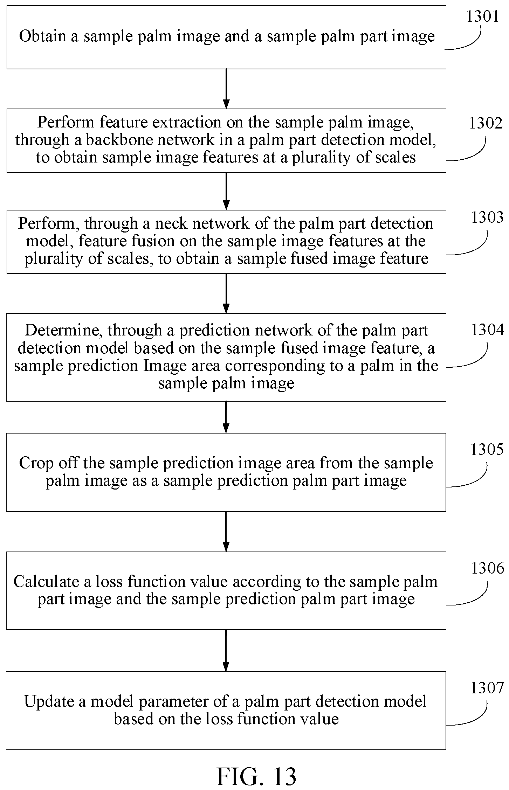

FIG. 13 is a flowchart of a method for training a palm detection model according to an exemplary embodiment of this application. The method is performed by a palm identification device. The method includes the following operations.

Operation 1301: Obtain a sample palm image and a sample palm part image.

The sample palm image is an image of a to-be-determined user identifier. The sample palm image includes a palm. The palm is an image of a physical palm of a user whose identity is to be verified. The sample palm image may further include other information, such as fingers of the user, a scene in which the palm of the user is captured, and the like. The sample palm image may be obtained by capturing, by the palm identification device, a physical palm of a user whose identity is to be verified, or may be transmitted by another device.

The sample palm part image is an effective identification area labeled in the sample palm image, or the sample palm part image is an area in the sample palm image in which the labeled palm is located, or the sample palm part image is an area in the sample palm image that is labeled and that can be configured for identification.

For example, the sample palm image is collected in a manner in which 50 to 100 sample palm images are obtained. The sample palm image is cleaned up by finding a duplicate value, a missing value, and an outlier, so that a valid sample palm image is obtained. Code for cleaning up the sample palm image may be represented as:

allocate output Pixel Value [image width][image height]

allocate window [window width×window height]

edge x=(window width/2) rounded down

edge y=(window height/2) rounded down

   for x from edge x to image width–edge x do

   for y from edge y to image height–edge y do

     i=0

     for fx from 0 to window width do

for fy from 0 to window height do

window[i]=input Pixel Value[x+fx–edge x][y+fy–edge y]

i=i+1

sort entries in window []

output Pixel Value[x][y]=window [window width*window height/2]

A collection distance requirement of the sample palm image is that the palm is placed at a position of 5 cm, 8 cm, 10 cm, 12 cm, or 15 cm from the palm identification device for collection, and collection is performed at each distance for 10 to 15 seconds.

The sample palm part image is obtained in a manner in which a palm area in the sample palm image is labeled by using a labeling tool Labeling. Code for labeling the palm area may be represented as:

```
<object>
    <name>plam</name>
    <pose>Unspecified</pose>
    <truncated>0</truncated>
    <difficult>0</difficult>
    <bndbox>
        <xmin>45</xmin>
```

```
        <ymin>34</ymin>
        <xmax>104</xmax>
        <ymax>84</ymax>
    </bndbox>
</object>
```

In the foregoing code, 45 represents a minimum value in the palm area on an x-axis, 104 represents a maximum value in the palm area on the x-axis, 34 represents a minimum value in the palm area on a y-axis, and 84 represents a minimum value in the palm area on the y-axis.

The labeling tool Labeling replaces the conventional one-hot encoded label vector $y_{hot}$ with the updated label vector $\hat{y}_i$ with reference to the uniform distribution theorem.

$$\hat{y}_i = y_{hot}(1 - \alpha) + \alpha/k$$

In the formula, k is a total quantity of categories of the multi-classification, and $\alpha$ is a small hyperparameter (generally 0.1).

That is, the label vector $\hat{y}_i$ may be represented as:

$$\hat{y}_i = \begin{cases} 1 - \alpha, & i = a \text{ quantity of categories} \\ \dfrac{\alpha}{k}, & i \neq a \text{ quantity of categories} \end{cases}$$

The label vector $\hat{y}_i$ is equivalent to adding noise to a real distribution, to prevent the model from being too confident about a correct label, so that output values of predicted positive and negative samples do not differ as greatly. This avoids overfitting and improves a generalization capability of the model.

Operation 1302: Perform feature extraction on the sample palm image, through a backbone network in a palm detection model, to obtain sample image features of a plurality of sizes.

For example, the palm identification device captures a physical palm of the user, to obtain the sample palm image. The sample palm image includes the palm. The palm may be a left palm of the user or a right palm of the user.

For example, the palm identification device is an internet of things device. The internet of things device captures the left palm of the user through a camera, to obtain the sample palm image. The internet of things device may be a cash register device in a store. For another example, when the user shops for a transaction in the store, the user extends a palm toward a camera of a payment terminal in the store, and the payment terminal in the store captures the physical palm of the user through the camera, to obtain the sample palm image.

In all embodiments of the present disclosure, the palm identification device establishes a communication connection with another device, and receives, through the communication connection, a sample palm image transmitted by the another device. For example, the palm identification device is a payment application server, and the another device may be a payment terminal. After the payment terminal captures the physical palm of the user, to obtain the sample palm image, the sample palm image is transmitted to the payment application server through the communication connection between the payment terminal and the payment application server, so that the payment application server can determine a user identifier of the sample palm image.

In all embodiments of the present disclosure, the sample prediction image area is obtained by prediction by a palm detection model, and the palm detection model includes a backbone network; and the performing feature extraction on the sample palm image, to obtain sample image features of a plurality of sizes includes: inputting the sample palm image into the backbone network; performing a slicing operation on the sample palm image through the backbone network, to obtain slice images of the plurality of sizes; and respectively performing feature extraction on the slice images of the plurality of sizes through the backbone network, to obtain the sample image features of the plurality of sizes.

The palm detection model is an artificial intelligence model, may be a deep learning model, or may be a neural network model. The palm detection model has at least a function of determining, based on a sample fused image feature, a sample prediction image area defining a palm in the sample palm image. The backbone network is a structure configured for extracting sample image features of a plurality of sizes from the sample palm image in the palm detection model. The slicing operation is an operation of segmenting the sample palm image to generate images of smaller sizes. The smaller size means that a size of the generated image is smaller than the size of the sample palm image. Pixels in the slice image are derived from the sample palm image.

The palm identification device may input the sample palm image into the backbone network, and the backbone network performs a slicing operation, to obtain the slice images of the plurality of sizes. The palm identification device may perform feature extraction on the slice images of the plurality of sizes, to obtain the sample image features of the plurality of sizes corresponding to the sample palm image.

In all embodiments of the present disclosure, the performing a slicing operation on the sample palm image through the backbone network, to obtain slice images of the plurality of sizes includes: determining, through the backbone network and based on the sample palm image, a slice image of a maximum size in the plurality of sizes; and using, through the backbone network, the slice image of the maximum size as a first layer, and starting downsampling layer by layer, to obtain the slice images of the plurality of sizes including the slice image at the first layer.

A computer device may first determine, based on the sample palm image, the slice image of the maximum size in the plurality of sizes. The size of the sample image feature of the maximum size may be smaller than or equal to the size of the sample palm image. The computer device may downsample the sample palm image once, to generate the slice image of the maximum size in the plurality of sizes.

Downsampling the sample palm image is a process of sampling at least one pixel in the sample palm image. Pixels obtained through downsampling are spliced in sequence in the sample palm image, so that a slice image at a smaller size can be obtained.

If a quantity of the plurality of sizes is N, the plurality of sizes are N sizes. The N sizes are all different sizes, and therefore, there is a maximum size in the N sizes. The slice image of the maximum size is used as a first layer, downsampling layer by layer is started from the first layer, an $n^{th}$ layer is downsampled to obtain a slice image at an $(n+1)^{th}$ layer, and an $(N-1)^{th}$ layer is downsampled to obtain a slice image at the $N^{th}$ layer. n is a positive integer from 1 to N-1. Finally, a total of N slice images at 1 to N layers may be obtained.

In all embodiments of the present disclosure, the slice images of the plurality of sizes are obtained by downsampling layer by layer, which provides a new way to obtain the slice images of the plurality of sizes by segmenting the sample palm image.

In all embodiments of the present disclosure, the performing a slicing operation on the sample palm image through the backbone network, to obtain slice images of the plurality of sizes includes: downsampling and splicing, through the backbone network, pixels in the sample palm image of the plurality of sizes, to obtain the slice images of the plurality of sizes. There are two adjacent pixels in slice images at different sizes, and a quantity of pixels between the two pixels at which sampling occurs in the sample palm image is different.

In all embodiments of the present disclosure, the palm identification device may sample the pixels from the sample palm image at each size by using a sampling interval at the size, and splice the sampled pixels according to a relative position relationship in the sample palm image, to obtain a slice image at each size. The sampling interval is a quantity of pixels that are spaced, including intervals of pixels in two directions: a row and a column. The size is negatively correlated with the sampling interval. A larger size indicates a smaller sampling interval. A smaller size indicates a larger sampling interval. Pixels that are not sampled in the sample palm image may be concentrated to a channel of a sample image feature.

For example, for a maximum size in the plurality of sizes, in the sample palm image, sampling is performed on every other column. That is, a pixel is selected every other pixel in the row direction, and the selected pixels are spliced, to obtain the slice image. Information in the spliced slice image is not lost, but size information in the sample palm image is concentrated on the channel, and a convolution operation is performed on an obtained new image, to obtain a downsampling feature map without information loss.

For another example, at a second largest size in the plurality of sizes, in the sample palm image, sampling is performed in every two columns. That is, pixels are selected every two pixels, and the selected pixels are spliced, to obtain the slice image. Information in the spliced slice image is not lost, but size information in the sample palm image is concentrated on the channel, and a convolution operation is performed on an obtained new image, to obtain a downsampling feature map without information loss.

For example, a size of an original image is: 640*640*3. Through the slicing operation, a feature map of 320*320*12 is obtained. 640*640 in the original image is configured for representing width*height, and 3 in the original image is configured for representing a length (also referred to as a quantity of channels) of a feature vector corresponding to each pixel.

Operation 1303: Perform, through a neck network of the palm detection model, feature fusion on the sample image features of the plurality of sizes, to obtain the sample fused image feature.

The sample prediction image area is obtained by prediction by the palm detection model, and the palm detection model includes a neck network; and the fusing the sample image features of the plurality of sizes, to obtain a sample fused image feature includes: performing, through the neck network, feature fusion on the sample image features of the plurality of sizes, to obtain the sample fused image feature.

The neck network belongs to the palm detection model and is a structure configured for performing feature fusion on the sample image features of the plurality of sizes to obtain the sample fused image feature. The neck network is connected to the backbone network, and is configured to receive the sample image features of the plurality of sizes output by the backbone network.

The sample image features of the plurality of sizes refer to features obtained by performing feature extraction on images of the plurality of sizes. Sample image features at different sizes may express different information. In the sample image features of the plurality of sizes, sample image features of larger sizes express more position information, and sample image features of smaller sizes express more semantic information.

For example, the palm identification device extracts features of the plurality of sizes, under different receptive fields, and in different categories, and fuses the sample image features of the plurality of sizes, to obtain the sample fused image feature corresponding to the sample palm image.

In all embodiments of the present disclosure, the performing, through the neck network, feature fusion on the sample image features of the plurality of sizes, to obtain the sample fused image feature includes: performing, through the neck network, fusion of the same size on the sample image features of the plurality of sizes, to obtain the sample fused image feature. The fusion of the sample image features of the same size may be summation or averaging.

The palm identification device fuses the sample image features of the plurality of sizes, which increases detection accuracy of a small target, so that the sample prediction image area can be detected more accurately. In this way, the sample prediction palm part image can be extracted out more accurately. This further reduces a data amount of the sample prediction encrypted palm part image data, improves identity identification efficiency, and ensures security of identity identification.

In all embodiments of the present disclosure, the performing, through the neck network, feature fusion on the sample image features of the plurality of sizes, to obtain the sample fused image feature includes: performing, through the neck network, feature fusion based on the sample image features of the plurality of sizes, to obtain first intermediate features of the plurality of sizes; performing, through the neck network, feature fusion of the plurality of sizes based on the first intermediate features of the plurality of sizes, to obtain second intermediate features of the plurality of sizes; and performing, through the neck network, feature fusion on the second intermediate features of the plurality of sizes, to obtain the sample fused image feature.

The feature fusion of the plurality of sizes refers to performing feature fusion of different sizes respectively. The first intermediate features of the plurality of sizes may be in a one-to-one correspondence with the sample image features of the plurality of sizes. The first intermediate features of the plurality of sizes may be in a one-to-one correspondence with the second intermediate features of the plurality of sizes. The sample image features of the plurality of sizes may be consistent with the first intermediate features of the plurality of sizes. The first intermediate features of the plurality of sizes may be consistent with the second intermediate features of the plurality of sizes. The performing feature fusion on the second intermediate features of the plurality of sizes may be fusing, of the same size, the second intermediate features of the plurality of sizes. The fusion may be summation or averaging.

In all embodiments of the present disclosure, features of different sizes are fused and are finally fused into the sample fused image feature, which can fully express detailed features in the sample palm image, so that a sample prediction image area is detected more accurately. In this way, the sample prediction palm part image can be extracted out more accurately. This further reduces a data amount of the sample prediction encrypted palm part image data, improves identity identification efficiency, and ensures security of identity identification.

In all embodiments of the present disclosure, the plurality of sizes are N sizes, N is a positive integer greater than 1, and the extracting, based on the sample image features of the plurality of sizes, first intermediate features of the plurality of sizes includes: determining, based on a sample image feature ranking first in a positive order of size, a first intermediate feature ranking first in the positive order of size; upsampling layer by layer starting from the first intermediate feature ranking first in the positive order of size, and fusing a result of upsampling a first intermediate feature ranking $n^{th}$ in the positive order of size with a sample image feature ranking $(n+1)^{th}$ in the positive order of size, to obtain a first intermediate feature ranking $(n+1)^{th}$ in the positive order of size; and determining, when obtaining a first intermediate feature at an $N^{th}$ layer, the first intermediate features of the plurality of sizes from a first layer to the $N^{th}$ layer. n is a positive integer from 1 to N-1; and the positive order of size is in ascending order of size.

The ascending order is referred to as the positive order, and the positive order of size is in ascending order of size. Upsampling is a process of increasing the size. The upsampling may use a size at a next layer as a target, and adjacent feature elements in a feature at each layer are interpolated, to obtain a feature at the next layer.

In all embodiments of the present disclosure, the determining, based on a sample image feature ranking first in a positive order of size, a first intermediate feature ranking first in the positive order of size includes: performing at least one time of convolution on the sample image feature ranking first in the positive order of size, to obtain the first intermediate feature ranking first in the positive order of size. In addition to performing convolution, channel adjustment may be further performed. A quantity of channels of the first intermediate features after the channel adjustment is performed may be consistent.

In all embodiments of the present disclosure, a size of a result of upsampling the first intermediate feature ranking $n^{th}$ in the positive order of size may be the same as a size of a sample image feature ranking $(n+1)^{th}$ in the positive order of size. The result of upsampling the first intermediate feature ranking $n^{th}$ in the positive order of size and the sample image feature ranking $(n+1)^{th}$ in the positive order of size are fused, and the two may be spliced, or summation or averaging may be performed on the two of the same size.

For example, FIG. 5 is a schematic diagram of sample image feature fusion. A palm identification device performs feature extraction on a sample palm image 501, to obtain sample image features 502 of a plurality of sizes corresponding to the sample palm image 501. The sample image features 502 include a feature layer T1, a feature layer T2, a feature layer T3, and a feature layer T4. After the sample image feature 502 is obtained, one time of convolution is performed on the feature layer T4 and channel adjustment is performed to obtain a feature layer P4. The feature layer P4 is upsampled and is combined with the feature layer T3, and then convolution is performed and channel adjustment is performed to obtain a feature layer P3. The feature layer P3 is upsampled and is combined with the feature layer T2, and then convolution is performed and channel adjustment is performed to obtain a feature layer P2. The feature layer P2 is upsampled and is combined with the feature layer T1, and then 1*1 convolution is performed and channel adjustment is performed to obtain a feature layer P1.

In all embodiments of the present disclosure, the plurality of sizes are N sizes, N is a positive integer greater than 1, and the performing feature fusion of the plurality of sizes based on the first intermediate features of the plurality of sizes, to obtain second intermediate features of the plurality of sizes includes: determining, based on a first intermediate feature ranking first in a reverse order of size, a second intermediate feature ranking first in the reverse order of size; downsampling layer by layer starting from the second intermediate feature ranking first in the reverse order of size, and fusing a result of downsampling a second intermediate feature ranking $m^{th}$ in the reverse order of size with a first intermediate feature ranking $(m+1)^{th}$ in the reverse order of size, to obtain a second intermediate feature ranking $(n+1)^{th}$ in the reverse order of size, where m is an integer from 1 to N-1; and the reverse order of size is in descending order of size; and determining, when obtaining the first intermediate feature at the $N^{th}$ layer, the first intermediate features of the plurality of sizes from the first layer to the $N^{th}$ layer.

The descending order is referred to as the reverse order, and the reverse order of size is in descending order of size. Downsampling is a process of reducing a size. The downsampling may use a size at a next layer as a target, and feature elements in a feature at each layer are used at intervals, to obtain a feature at the next layer. The first intermediate feature may be referred to as a semantic sample image feature. The second intermediate feature may be referred to as a position sample image feature. The semantic sample image features represent more semantic information, and the semantic sample image features represent more position information.

In all embodiments of the present disclosure, the determining, based on a first intermediate feature ranking first in a reverse order of size, a second intermediate feature ranking first in the reverse order of size includes: performing at least one time of convolution on the first intermediate feature ranking first in the reverse order of size, to obtain the second intermediate feature ranking first in the reverse order of size. In addition to performing convolution, channel adjustment may be further performed. A quantity of channels of the first intermediate features after the channel adjustment is performed may be consistent.

A size of a result of downsampling the second intermediate feature ranking $m^{th}$ in the reverse order of size may be consistent with a size of a first intermediate feature ranking $(m+1)^{th}$ in the reverse order of size. The result of downsampling the second intermediate feature ranking $m^{th}$ in the reverse order of size and the first intermediate feature ranking $(m+1)^{th}$ in the reverse order of size are fused, and the two may be spliced, or summation or averaging may be performed on the two of the same size.

For example, the palm identification device may perform one time of convolution on the feature layer P1 and perform channel adjustment to obtain a feature layer N1. The feature layer N1 is downsampled and is combined with the feature layer P2, and then convolution is performed and channel adjustment is performed to obtain a feature layer N2. The feature layer N2 is downsampled and is combined with the feature layer P3, and then convolution is performed and channel adjustment is performed to obtain a feature layer N3. The feature layer N3 is downsampled and is combined with the feature layer P4, and then convolution is performed and channel adjustment is performed to obtain a feature layer N4. The palm identification device fuses features at a feature layer N1-4, to obtain a fused image feature 503.

In all embodiments of the present disclosure, an activation function in the convolution is a logistic activation function.

In all embodiments of the present disclosure, the palm identification device upsamples the sample image features of the plurality of sizes in ascending order of size, to obtain the first intermediate feature; the palm identification device downsamples the sample image features of the plurality of sizes in descending order of size, to obtain the second intermediate feature; and the palm identification device performs feature fusion on the first intermediate feature and the second intermediate feature, to obtain the sample fused image feature.

Operation 1304: Determine, through a prediction network of the palm detection model based on the sample fused image feature, a sample prediction image area defining a palm in the sample palm image.

The sample prediction image area is an identifier configured for representing a position of the palm in the sample palm image.

In all embodiments of the present disclosure, the sample prediction image area is determined by the palm detection model, and the palm detection model includes a prediction network; and the determining, based on the sample fused image feature, a sample prediction image area defining a palm in the sample palm image includes: performing grid division on the sample fused image feature, to obtain a plurality of grid features of the sample fused image feature; and inputting the plurality of grid features into the prediction network, and performing prediction on the plurality of grid features, to obtain the sample prediction image area.

For example, the palm identification device performs grid division on the sample fused image feature, to obtain gridded sample fused image features; and the palm identification device inputs the gridded fusion features into the prediction network, and the prediction network performs prediction on each grid, to obtain the sample prediction image area. Prediction is performed on the plurality of grid features, to obtain the sample prediction image area. Specifically, a position of the sample prediction image area may be determined based on prediction results of the plurality of grid features.

In all embodiments of the present disclosure, the palm identification device is equipped with an infrared camera, and the sample palm image processing method further includes: obtaining an infrared image collected of a palm the same as the sample palm image, where the infrared image is an image obtained by the infrared camera imaging, based on infrared light, the palm; recognizing a palm area from the infrared image; and the extracting a sample prediction palm part image from the sample palm image based on the sample prediction image area includes: determining an overlapping area between the sample prediction image area in the sample palm image and the palm area in the infrared image; and extracting a sample prediction palm part image from the sample palm image based on the overlapping area.

In all embodiments of the present disclosure, the palm identification device is further equipped with an infrared camera. The palm identification device obtains an infrared image corresponding to the same physical palm. The palm identification device performs area identification on the infrared image, to determine a palm area in the infrared image. The infrared image is an image obtained by the infrared camera imaging, based on infrared light, the palm.

In all embodiments of the present disclosure, the recognizing a palm area from the infrared image includes: detecting a finger gap point in the infrared image; and determining the palm area in the infrared image based on the finger gap point.

For example, the palm identification device performs detection on the finger gap point in the infrared image, and determines the palm area in the infrared image based on the finger gap point.

FIG. 6 is a schematic diagram of a finger gap point in a palm. The finger gap point is a first finger gap point 601 between an index finger and a middle finger, or the finger gap point is a second finger gap point 602 between the middle finger and a ring finger, or the finger gap point is a third finger gap point 603 between the ring finger and a little finger.

Because a palm area in a sample palm image may exist in any area in the sample palm image, to determine a position of the palm area in the sample palm image, finger gap point detection is performed on the sample palm image, to obtain at least one finger gap point in the sample palm image, so that the palm area can be determined subsequently according to the at least one finger gap point.

Operation 1305: Extract a sample prediction palm part image from the sample palm image based on the sample prediction image area.

The sample prediction palm part image is an effective area for identification predicted in the sample palm image, or the sample prediction palm part image is an area in the sample palm image in which the predicted palm is located, or the sample prediction palm part image is an area in the sample palm image that is predicted and that can be configured for identification.

In all embodiments of the present disclosure, the palm identification device obtains at least three finger gap points in the infrared image; the finger gap points are sequentially connected, to obtain a finger gap point connecting line; and the palm identification device crops the infrared image based on the finger gap point connecting line to obtain the palm area.

In all embodiments of the present disclosure, the determining an overlapping area between the sample prediction image area in the sample palm image and the palm area in the infrared image includes: obtaining a coordinate parameter of the sample prediction image area in the sample palm image, and obtaining a coordinate parameter of the palm area in the infrared image; and determining an overlapping area between the sample prediction image area and the palm area based on the coordinate parameter of the sample prediction image area and the coordinate parameter of the palm area.

The palm identification device obtains a coordinate parameter of the sample prediction image area in the sample palm image, and obtains a coordinate parameter of the palm area in the infrared image; and the palm identification device extracts, based on the overlapping area identified using the coordinate parameter of the sample prediction image area and the coordinate parameter of the infrared image area, the sample palm image to obtain the sample prediction palm part image corresponding to the palm.

Operation 1306: Calculate a loss function value according to the sample palm part image and the sample prediction palm part image.

For example, the palm identification device calculates the loss function value based on the sample palm part image and the sample prediction palm part image.

Operation 1307: Update a model parameter of the palm detection model based on the loss function value.

Updating of the model parameter refers to updating a network parameter in the palm detection model, or updating a network parameter of each network module in the model, or updating a network parameter of each network layer in the model, but is not limited thereto. This is not limited in the embodiments of this application.

The model parameter of the palm detection model includes at least one of a network parameter of a backbone network, a network parameter of a neck network, and a network parameter of a prediction network.

In all embodiments of the present disclosure, updating the model parameter of the palm detection model includes updating network parameters of all network modules in the palm detection model, or fixing network parameters of some network modules in the palm detection model, and updating only network parameters of the remaining part of network modules. For example, when the model parameter of the palm detection model is updated, the network parameter of the backbone network in the palm detection model is fixed, and only the network parameter of the neck network and the network parameter of the prediction network are updated.

The network parameter of the backbone network, the network parameter of the neck network, and the network parameter of the prediction network in the palm detection model are updated based on the loss function value by using the loss function value as a training indicator until the loss function value converges, to obtain the palm detection model whose training is completed.

That the loss function value converges refers to at least one of the following cases: The loss function value no longer changes, or an error difference between two adjacent iterations during training of the palm detection model is less than a preset value, or a quantity of times of training of the palm detection model reaches a preset quantity of times, but is not limited thereto. This is not limited in the embodiments of this application.

In all embodiments of the present disclosure, a target condition satisfied by the training may be that a quantity of times of iterations of training of an initial model reaches a target quantity of times. A technician may preset the quantity of times of iterations of training. Alternatively, the target condition satisfied by the training may be that the loss value satisfies a target threshold condition, but is not limited thereto. This is not limited in the embodiments of this application.

In summary, according to the method provided in all embodiments of the present disclosure, the sample image features of the plurality of sizes corresponding to the sample palm image are obtained by performing feature extraction on the sample palm image; feature fusion is performed on the sample image features of the plurality of sizes, to obtain the sample fused image feature; prediction is performed based on the sample fused image feature, to obtain the sample prediction image area defining the palm in the sample palm image; the sample palm image is cropped based on the sample prediction image area to obtain the sample prediction palm part image corresponding to the palm; a loss function value is calculated based on the sample palm part image and the sample prediction palm part image; and the model parameter of the palm detection model is updated based on the loss function value, so that the trained palm detection model can have higher prediction accuracy of the image area, to obtain a more accurate image area.

For example, application scenarios of the palm image processing method provided in the embodiments of this application include but are not limited to the following scenarios.

For example, in a palm image identification payment scenario:

A palm identification device of a merchant captures a physical palm of a user, to obtain a palm image of the user, determines a target user identifier of the palm image by using the palm image processing method provided in the embodiments of this application, and transfers some resources in a resource account corresponding to the target user identifier to a merchant resource account, to implement automatic payment through the palm.

For another example, in a cross-device payment scenario:

A user may complete identity registration at home or another private space by using a personal mobile phone, and bind an account of the user to a palm image of the user. Then the palm image of the user may be recognized on an in-store device, to determine the account of the user, and the user directly performs payment through the account.

For another example, in a check scenario at work:

A palm identification device obtains a palm image of a user by capturing a physical palm of the user. The palm image processing method provided in the embodiments of this application is used, so that a target user identifier of the palm image is determined, a check in label is established for the target user identifier, and it is determined that the target user identifier has completed check in at work at a current time point.

Certainly, in addition to being applied to the foregoing scenarios, the method provided in all embodiments of the present disclosure of this application may be alternatively applied to other scenarios requiring palm image processing. A specific application scenario is not limited in the embodiments of this application.

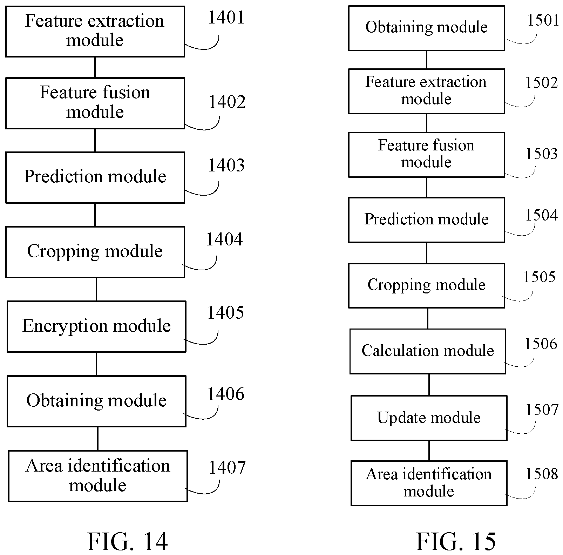

FIG. 14 is a schematic diagram of a structure of a palm image processing apparatus according to an exemplary embodiment of this application. The apparatus may be implemented as the entire or a part of a palm identification device by using software, hardware, or a combination of thereof. The apparatus includes:

a feature extraction module 1401, configured to obtain a palm image, and perform feature extraction on the palm image, to obtain image features of a plurality of sizes;

a feature fusion module 1402, configured to fuse the image features of the plurality of sizes, to obtain a fused image feature;

a prediction module 1403, configured to determine, based on the fused image feature, an image area defining a palm in the palm image;

a cropping module 1404, configured to extract a palm part image from the palm image based on the image area; and

an encryption module 1405, configured to perform image encryption on the palm part image, to obtain encrypted palm part image data, the encrypted palm part image data being configured for being transmitted to a server, and the server performing identity verification based on the encrypted palm part image data.

The feature extraction module 1401 may be a backbone network of the palm detection model, the feature fusion module 1402 may be a neck network of the palm detection model, the prediction module 1403 may be at least a part of a prediction network of the palm detection model, and the cropping module 1404 may be a part of the prediction network, or may be an independent module in the palm detection model, or may be an independent module outside the palm detection model.

In all embodiments of the present disclosure, the feature extraction module 1401 is the backbone network of the palm detection model, and is configured to perform a slicing operation on the palm image, to obtain slice images of the plurality of sizes; and respectively perform feature extraction on the slice images of the plurality of sizes, to obtain the image features of the plurality of sizes.

In all embodiments of the present disclosure, the feature extraction module 1401 is the backbone network of the palm detection model, and is configured to determine, based on the palm image, a slice image of a maximum size in the plurality of sizes; and use the slice image of the maximum size as a first layer, and start downsampling layer by layer, to obtain the slice images of the plurality of sizes including the slice image at the first layer.

In all embodiments of the present disclosure, the feature extraction module 1401 is the backbone network of the palm detection model, and is configured to downsample and splice, through the backbone network, pixels in the palm image of the plurality of sizes, to obtain the slice images of the plurality of sizes. There are two adjacent pixels in slice images of different sizes, and a quantity of pixels between the two pixels at which sampling occurs in the palm image is different.

In all embodiments of the present disclosure, the feature fusion module 1402 is the neck network of the palm detection model, and is configured to perform, through the neck network, feature fusion on the image features of the plurality of sizes, to obtain the fused image feature.

In all embodiments of the present disclosure, the feature fusion module 1402 is the neck network of the palm detection model, and is configured to perform feature fusion based on the image features of the plurality of sizes, to obtain first intermediate features of the plurality of sizes; perform feature fusion of the plurality of sizes based on the first intermediate features of the plurality of sizes, to obtain second intermediate features of the plurality of sizes; and perform feature fusion on the second intermediate features of the plurality of sizes, to obtain the fused image feature.

In all embodiments of the present disclosure, the plurality of sizes are N sizes, N is a positive integer greater than 1, and the feature fusion module 1402 is the neck network of the palm detection model, and is configured to determine, based on an image feature ranking first in a positive order of size, a first intermediate feature ranking first in the positive order of size; upsample layer by layer starting from the first intermediate feature ranking first in the positive order of size, and fuse a result of upsampling a first intermediate feature ranking $n^{th}$ in the positive order of size with an image feature ranking $(n+1)^{th}$ in the positive order of size, to obtain a first intermediate feature ranking $(n+1)^{th}$ in the positive order of size, where n is a positive integer from 1 to N-1; and the positive order of size is in ascending order of size; and determine, when obtaining a first intermediate feature at an $N^{th}$ layer, the first intermediate features of the plurality of sizes from a first layer to the $N^{th}$ layer.

In all embodiments of the present disclosure, the plurality of sizes are N sizes, N is a positive integer greater than 1, and the feature fusion module 1402 is the neck network of the palm detection model, and is configured to determine, based on a first intermediate feature ranking first in a reverse order of size, a second intermediate feature ranking first in the reverse order of size; downsample layer by layer starting from the second intermediate feature ranking first in the reverse order of size, and fuse a result of downsampling a second intermediate feature ranking $m^{th}$ in the reverse order of size with a first intermediate feature ranking $(m+1)^{th}$ in the reverse order of size, to obtain a second intermediate feature ranking $(n+1)^{th}$ in the reverse order of size, where m is an integer from 1 to N-1; and the reverse order of size is in descending order of size; and determine, when obtaining the first intermediate feature at the $N^{th}$ layer, the first intermediate features of the plurality of sizes from the first layer to the $N^{th}$ layer.

In all embodiments of the present disclosure, the prediction module 1403 is at least a part of the prediction network of the palm detection model, and is configured to perform grid division on the fused image feature, to obtain a plurality of grid features of the fused image feature; and perform prediction based on the plurality of grid features, to obtain the image area.

In all embodiments of the present disclosure, the palm identification device is equipped with an infrared camera, and the obtaining module 1406 is configured to obtain an infrared image collected of a palm the same as the palm image, where the infrared image is an image obtained by the infrared camera imaging, based on infrared light, the palm.

The area identification module 1407 is configured to recognize a palm area from the infrared image.

In all embodiments of the present disclosure, the cropping module 1404 is configured to determine an overlapping area between the image area in the palm image and the palm area in the infrared image; and extract the palm part image from the palm image based on the overlapping area.

In all embodiments of the present disclosure, the area identification module 1407 is configured to detect a finger gap point in the infrared image; and determine the palm area in the infrared image based on the finger gap point.

In all embodiments of the present disclosure, the area identification module 1407 is configured to obtain at least three finger gap points in the infrared image; sequentially connect the finger gap points, to obtain a finger gap point connecting line; and crop the infrared image based on the finger gap point connecting line to obtain the palm area.

In all embodiments of the present disclosure, the cropping module 1404 is configured to obtain a coordinate parameter of the image area in the palm image, and obtain a coordinate parameter of the infrared image area in the infrared image; and determine the overlapping area of the image area and the infrared image area based on the coordinate parameter of the image area and the coordinate parameter of the infrared image area.

FIG. 15 is a schematic diagram of a structure of an apparatus for training a palm detection model according to an exemplary embodiment of this application. The apparatus may be implemented as all or a part of a palm identification device by using software, hardware, or a combination of the two. The apparatus includes a palm detection model, an obtaining module 1501, a calculation module 1506, and an update module 1507. The palm detection model includes a feature extraction module 1502, a feature fusion module 1503, and a prediction module 1504, and may further include a cropping module 1505. The feature extraction module 1502 may be a backbone network of the palm detection model, the feature fusion module 1503 may be a neck network of the palm detection model, the prediction module 1504 may be at least a part of a prediction network, and the cropping module 1505 may be a part of the prediction network, or may be an independent module in the palm detection model, or may be an independent module outside the palm detection model.

The obtaining module 1501 is configured to obtain a sample palm image and a sample palm part image;

The feature extraction module 1502 is configured to perform feature extraction on the sample palm image, to obtain sample image features of a plurality of sizes;

The feature fusion module 1503 is configured to fuse the sample image features of the plurality of sizes, to obtain a sample fused image feature;

The prediction module 1504 is configured to determine, based on the sample fused image feature, a sample prediction image area defining a palm in the sample palm image;

The cropping module 1505 is configured to extract a sample prediction palm part image from the sample palm image based on the sample prediction image area;

The calculation module 1506 is configured to calculate a loss function value according to the sample palm part image and the sample prediction palm part image.

The update module 1507 is configured to update a model parameter of the palm detection model based on the loss function value.

In all embodiments of the present disclosure, the feature extraction module 1502 is the backbone network of the palm detection model, and is configured to perform a slicing operation on the sample palm image, to obtain slice images of the plurality of sizes; and respectively perform feature extraction on the slice images of the plurality of sizes, to obtain the sample image features of the plurality of sizes.

In all embodiments of the present disclosure, the feature extraction module 1502 is the backbone network of the palm detection model, and is configured to determine, based on the sample palm image, a slice image of a maximum size in the plurality of sizes; and use the slice image of the maximum size as a first layer, and start downsampling layer by layer, to obtain the slice images of the plurality of sizes including the slice image at the first layer.

In all embodiments of the present disclosure, the feature extraction module 1502 is the backbone network of the palm detection model, and is configured to sample and splice pixels in the sample palm image of the plurality of sizes, to obtain the slice images of the plurality of sizes. There are two adjacent pixels in slice images of different sizes, and a quantity of pixels between the two pixels at which sampling occurs in the sample palm image is different.

In all embodiments of the present disclosure, the feature fusion module 1503 is the neck network of the palm detection model, and is configured to perform feature fusion on the sample image features of the plurality of sizes, to obtain the sample fused image feature.

In all embodiments of the present disclosure, the feature fusion module 1503 is the neck network of the palm detection model, and is configured to input the sample image features of the plurality of sizes into the neck network; perform feature fusion based on the sample image features of the plurality of sizes, to obtain first intermediate features of the plurality of sizes; perform feature fusion of the plurality of sizes based on the first intermediate features of the plurality of sizes, to obtain second intermediate features of the plurality of sizes; and perform feature fusion on the second intermediate features of the plurality of sizes, to obtain the sample fused image feature.

In all embodiments of the present disclosure, the plurality of sizes are N sizes, N is a positive integer greater than 1, and the feature fusion module 1503 is the neck network of the palm detection model, and is configured to determine, based on a sample image feature ranking first in a positive order of size, a first intermediate feature ranking first in the positive order of size; upsample layer by layer starting from the first intermediate feature ranking first in the positive order of size, and fuse a result of upsampling a first intermediate feature ranking $n^{th}$ in the positive order of size with a sample image feature ranking $(n+1)^{th}$ in the positive order of size, to obtain a first intermediate feature ranking $(n+1)^{th}$ in the positive order of size, where n is a positive integer from 1 to N-1; and the positive order of size is in ascending order of size; and determine, when obtaining a first intermediate feature at an $N^{th}$ layer, the first intermediate features of the plurality of sizes from a first layer to the $N^{th}$ layer.

In all embodiments of the present disclosure, the plurality of sizes are N sizes, N is a positive integer greater than 1, and the feature fusion module 1503 is configured to determine, based on a first intermediate feature ranking first in a reverse order of size, a second intermediate feature ranking first in the reverse order of size; downsample layer by layer starting from the second intermediate feature ranking first in the reverse order of size, and fuse a result of downsampling a second intermediate feature ranking $m^{th}$ in the reverse order of size with a first intermediate feature ranking $(m+1)^{th}$ in the reverse order of size, to obtain a second intermediate feature ranking $(n+1)^{th}$ in the reverse order of size, where m is an integer from 1 to N-1; and the reverse order of size is in descending order of size; and determine, when obtaining the first intermediate feature at the $N^{th}$ layer, the first intermediate features of the plurality of sizes from the first layer to the $N^{th}$ layer.

In all embodiments of the present disclosure, the prediction module 1504 is at least a part of the prediction network of the palm detection model, and is configured to perform grid division on the sample fused image feature, to obtain a plurality of grid features of the sample fused image feature; and perform prediction on the plurality of grid features, to obtain the sample prediction image area.

In all embodiments of the present disclosure, the palm identification device is equipped with an infrared camera, and the obtaining module 1501 is configured to obtain an infrared image collected of a palm the same as the sample palm image, where the infrared image is an image obtained by the infrared camera imaging, based on infrared light, the palm.

The area identification module 1508 is configured to recognize a palm area from the infrared image.

The cropping module 1505 is configured to determine an overlapping area between the sample prediction image area in the sample palm image and the infrared image area in the infrared image; and extract a palm part image from the sample palm image based on the overlapping area.

In all embodiments of the present disclosure, the area identification module 1508 is configured to detect a finger gap point in the infrared image; and determine the palm area in the infrared image based on the finger gap point.

In all embodiments of the present disclosure, the cropping module 1505 is configured to obtain a coordinate parameter of the sample prediction image area in the sample palm image, and obtain a coordinate parameter of the palm area in the infrared image; and determine an overlapping area of the sample prediction image area and the infrared image area based on the coordinate parameter of the sample prediction image area and the coordinate parameter of the palm area.

In all embodiments of the present disclosure, the area identification module 1508 is configured to perform detection on the finger gap point in the infrared image, and determine the infrared image area in the infrared image based on the finger gap point.

In all embodiments of the present disclosure, the area identification module 1508 is configured to obtain at least three finger gap points in the infrared image; sequentially connect the finger gap points, to obtain a finger gap point connecting line; and crop the infrared image based on the finger gap point connecting line to obtain the infrared image area.

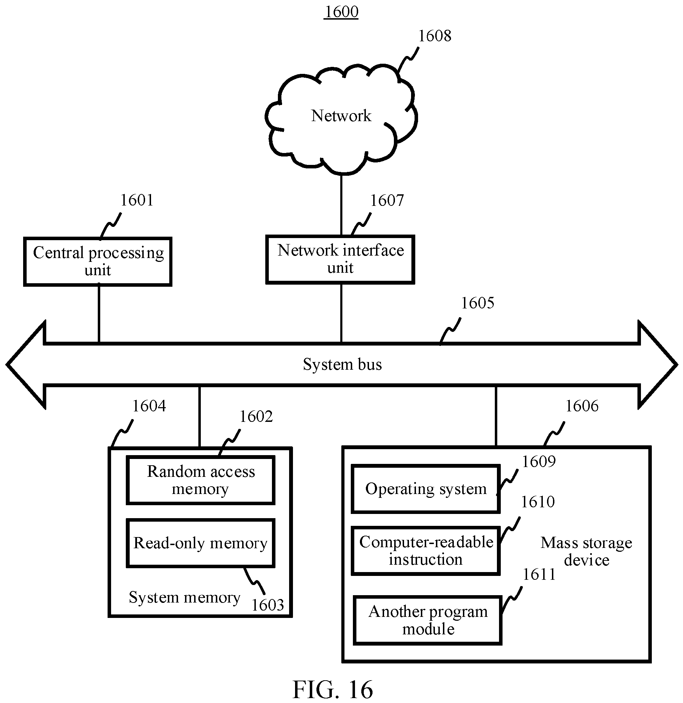

FIG. 16 is a structural block diagram of a computer device 1600 according to an exemplary embodiment of this application. The computer device can be implemented as the server in the foregoing solution of this application. The image computer device 1600 includes a central processing unit (CPU) 1601, a system memory 1604 including a random access memory (RAM) 1602 and a read-only memory (ROM) 1603, and a system bus 1605 connecting the system memory 1604 to the CPU 1601. The image computer device 1600 further includes a large-capacity storage device 1606 configured to store an operating system 1609, an application 1610 and another program module 1611.

The mass storage device 1606 is connected to the CPU 1601 by using a mass storage controller (not shown) connected to the system bus 1605. The large-capacity storage device 1606 and a computer-readable medium associated with the large-capacity storage device provide non-volatile storage to the image computer device 1600. In other words, the mass storage device 1606 may include a computer-readable medium (not shown) such as a hard disk or a compact disc read-only memory (CD-ROM) drive.

In general, the computer-readable medium may include a computer storage medium and a communication medium. The computer storage medium includes volatile and non-volatile media, and removable and non-removable media implemented by using any method or technology and configured to store information such as a computer-readable instruction, a data structure, a program module, or other data. The computer storage medium includes a RAM, an erasable programmable ROM (EPROM), an electrically-erasable programmable ROM (EEPROM), a flash memory or another solid-state memory technology, a CD-ROM, a digital versatile disc (DVD) or another optical memory, a magnetic cassette, a magnetic tape, a magnetic disk memory, or another magnetic storage device. Certainly, a person skilled in the art may know that the computer storage medium is not limited to the foregoing types. The system memory 1604 and the large-capacity storage device 1606 may be collectively referred to as a memory.

According to the embodiments of the present disclosure, the image computer device 1600 may be further connected, through a network such as the internet, to a remote computer on the network and run. That is, the image computer device 1600 may be connected to a network 1608 by using a network interface unit 1607 connected to the system bus 1605, or may be connected to another type of network or a remote computer system (not shown) by using a network interface unit 1607.

The memory further includes at least one piece of computer-readable instruction. The at least one piece of computer-readable instruction is stored in the memory. The central processing unit 1601 executes the at least one piece of computer-readable instruction to implement all or some of the operations in the palm image processing method shown in the foregoing embodiments or the method for training a palm detection model.

The embodiments of this application further provide a computer device, the computer device includes a processor and a memory, the memory stores at least one program, and the at least one program is loaded and executed by the processor to implement the palm image processing method provided in the foregoing method embodiments or the method for training a palm detection model.

The embodiments of this application further provide a non-transitory computer-readable storage medium, the storage medium having at least one computer-readable instruction stored therein, and the at least one computer-readable instruction being loaded and executed by a processor to implement the palm image processing method provided in the foregoing method embodiments or the method for training a palm detection model.

The embodiments of this application further provide a computer program product, the computer program product including computer-readable instructions, and the computer-readable instructions being stored in a non-transitory computer-readable storage medium; and a processor of a computer device reading the computer-readable instructions from the computer-readable storage medium and executing the computer-readable instructions, to enable the computer device to implement the palm image processing method provided in the foregoing method embodiments or the method for training a palm detection model.

In a specific implementation of this application, the related data, a palm image, historical data, and a portrait are user data processing-related data that is related to a user identity or user characteristics. When the embodiments of this application are applied to specific products or technologies, user permission or consent needs to be obtained, and the collection, use, and processing of related data comply with related laws, regulations, and standards of related countries and regions.

"Plurality of" mentioned in the specification means two or more. "And/or" describes an association relationship for describing associated objects and represents that three relationships may exist. For example, A and/or B may represent the following three cases: only A exists, both A and B exist, and only B exists. The character "/" in this specification generally indicates an "or" relationship between the associated objects.

A person of ordinary skill in the art may understand that all or some of the operations of the embodiments may be implemented by hardware or a program instructing related hardware. The program may be stored in a computer-readable storage medium. The storage medium may be a read-only memory, a magnetic disk, an optical disc, or the like.

Technical features of the foregoing embodiments may be combined in different manners to form other embodiments. For concise description, not all possible combinations of the technical features in the embodiment are described. However, provided that combinations of the technical features do not conflict with each other, the combinations of the technical features are considered as falling within the scope recorded in this specification.

The term "module" in this application refers to a computer program or part of the computer program that has a predefined function and works together with other related parts to achieve a predefined goal and may be all or partially implemented by using software, hardware (e.g., processing circuitry and/or memory configured to perform the predefined functions), or a combination thereof. Each module can be implemented using one or more processors (or processors and memory). Likewise, a processor (or processors and memory) can be used to implement one or more modules. Moreover, each module can be part of an overall module that includes the functionalities of the module. The foregoing embodiments only describe several implementations of this application, which are described specifically and in detail, but cannot be construed as a limitation to the patent scope of the present invention. For a person of ordinary skill in the art, several transformations and improvements can be made without departing from the idea of this application. These transformations and improvements belong to the protection scope of this application. Therefore, the protection scope of the patent of this application shall be subject to the appended claims.

**Claims**

1. A palm image processing method performed by a computer device, the method comprising:

obtaining a palm image of a palm;

extracting image features of a plurality of sizes from the palm image;

fusing the image features into a fused image feature;

extracting, based on the fused image feature and from the palm image, an image area defining the palm as a palm part image;

encrypting the palm part image into encrypted palm part image data for performing identity identification.

2. The method according to claim 1, wherein extracting the image features of the plurality of sizes from the palm image comprises:

slicing the palm image through a backbone network into slice images of the plurality of sizes; and

extracting the image features of the plurality of sizes from the slice images of the plurality of sizes.

3. The method according to claim 2, wherein slicing the palm image through the backbone network into the slice images of the plurality of sizes comprises:
downsampling a first slice image into a second slice image which serves as one of the slice images, wherein the palm image serves as the first slice image of an initial downsampling operation, the first slice image of a downsampling operation after the initial downsampling operation is a second slice image of a previous downsampling operation.

4. The method according to claim 2, wherein slicing the palm image through the backbone network into the slice images of the plurality of sizes comprises:
downsampling, using the backbone network, the palm image for a plurality of times respectively at different rates to obtain the slice images of the plurality of sizes.

5. The method according to any one of claims 1 to 3, wherein fusing the image features into the fused image feature comprises:
inputting the image features into a neck network for feature fusion, to obtain the fused image feature.

6. The method according to claim 5, wherein inputting the image features into the neck network for feature fusion, to obtain the fused image feature comprises:

inputting the image features into the neck network;

converting, using convolution, the image features into first intermediate features having a plurality of sizes;

converting, using convolution, the first intermediate features into second intermediate features having a plurality of sizes; and

fusing the second intermediate features into the fused image feature.

7. The method according to claim 6, wherein converting using convolution the image features into the first intermediate features comprises:

converting, through at least one convolution, an image feature having a minimum size in the image features into an initial first intermediate feature which serves as a first intermediate feature having a minimum size of the first intermediate features;

upsampling a first intermediate feature and fusing a result of the upsampling with an image feature having a corresponding size in the image features to obtain another first intermediate feature which serves as one of the first intermediate features having the plurality of sizes, wherein each of the first intermediate features other than the initial first intermediate feature is obtained through the upsampling and fusing operation using a first intermediate feature obtained through a previous upsampling and fusing operation.

8. The method according to claim 6 or 7, wherein converting using convolution the first intermediate features into the second intermediate features comprises:

converting, through at least one convolution, a first intermediate feature having a maximum size in the first intermediate features into an initial second intermediate feature which serves as a second intermediate feature having a maximum size of the second intermediate features;

downsampling a second intermediate feature and fusing a result of the downsampling with a first intermediate feature having a corresponding size in the first intermediate features to obtain another second intermediate feature which serves as one of the second intermediate features having the plurality of sizes, wherein each of the second intermediate features other than the initial second intermediate feature is obtained through the downsampling and fusing operation using a second intermediate feature obtained through a previous downsampling and fusing operation.

9. The method according to any one of claims 1 to 8, wherein extracting the image area defining the palm as the palm part image comprises:

dividing fused image feature into a plurality of grids; and
inputting the plurality of grids into a prediction network, and identifying the image area using the prediction network.

10. The method according to any one of claims 1 to 9, further comprising:

obtaining an infrared image of the palm captured by an infrared camera;
identifying an infrared image area defining the palm in the infrared image; and
wherein extracting the image area defining the palm from the palm image as the palm part image comprises:

determining an overlapping area of the image area in the palm image and the infrared image area in the infrared image; and
extracting the overlapping area from the palm image as the palm part image.

11. The method according to claim 10, wherein identifying the infrared image area defining the palm from the infrared image comprises:

detecting a point identifying a gap between fingers in the infrared image; and
determining the infrared image area in the infrared image based on the point.

12. The method according to claim 10 or 11, wherein determining the overlapping area of the image area in the palm image and the infrared image area in the infrared image comprises:

obtaining first coordinates of the image area in the palm image, and obtaining second coordinates of the infrared image area in the infrared image; and
determining the overlapping area using the first coordinates and the second coordinates.

13. A method for training a palm part detection model, performed by a computer device, the method comprising:

obtaining a sample palm image of a palm and a sample palm part image;
extracting sample image features of a plurality of sizes from the sample palm image;
fusing the sample image features of the plurality of sizes into a sample fused image feature;
determining, using the sample fused image feature, a sample prediction image area defining the palm in the sample palm image;
extracting the sample prediction image area from the sample palm image as a sample prediction palm part image;
calculating a loss function value using the sample palm part image and the sample prediction palm part image; and
updating a model parameter of the palm part detection model based on the loss function value.

14. A palm image processing apparatus, comprising:

a feature extraction module, configured to obtain a palm image of a palm, and extract image features of a plurality of sizes from the palm image;
a feature fusion module, configured to fuse the image features of the plurality of sizes into a fused image feature;
a prediction module, configured to determine, based on the fused image feature, an image area defining the palm in the palm image;
a cropping module, configured to extract the image area from the palm image as a palm part image; and
an encryption module, configured to encrypt the palm part image into encrypted palm part image data for performing identity verification.

15. An apparatus for training a palm part detection model, comprising a palm part detection model, and further comprising an obtaining module, a cropping module, a calculation module, and an update module, the palm part detection model comprising a feature extraction module, a feature fusion module, and a prediction module;

the obtaining module being configured to obtain a sample palm image of a palm and a sample palm part image;

the feature extraction module being configured to extract sample image features of a plurality of sizes from the sample palm image;

the feature fusion module being configured to fuse the sample image features of the plurality of sizes into a sample fused image feature;

the prediction module being configured to determine, based on the sample fused image feature, a sample prediction image area defining the palm in the sample palm image;

the cropping module being configured to extract the sample prediction image area from the sample palm image as a sample prediction palm part image;

the calculation module being configured to calculate a loss function value according to the sample palm part image and the sample prediction palm part image; and

the update module being configured to update a model parameter of the palm part detection model based on the loss function value.

16. A computer device, comprising a processor and a memory, the memory storing at least one computer-readable instruction, the at least one computer-readable instruction, when loaded and executed by the processor, causing the processor to implement the method according to any one of claims 1 to 13.

17. A computer storage medium, storing at least one computer-readable instruction, the at least one computer-readable instruction, when loaded and executed by a processor, causing the processor to implement the method according to any one of claims 1 to 13.

18. A computer program product, comprising computer-readable instructions, the computer-readable instructions, when loaded and executed by a processor, causing the processor to implement the method according to any one of claims 1 to 13.

Palm image 11

Palm
identification
device 10

Palm part
prediction

Palm part
image 12

Palm payment

Image
encryption

Image decryption
and palm part
comparison and
identification

Encrypted palm
part image data 13

User
identifier 14

FIG. 1

100

100

Network

Network

100

200

100

100

FIG. 2

Obtain a palm image, and extracting image features of a plurality of sizes from a palm image — 302

Fuse the image features of the plurality of sizes into a fused image feature — 304

Determine an image area defining a palm part in the palm image based on the fused image feature — 306

Extract the image area from the palm image as a a palm part image — 308

Encrypt the palm part image into encrypted palm part image data for performing identification. The encrypted palm part image data can be transmitted to a server which performs identity identification using the encrypted palm part image data — 310

FIG. 3

Obtain a palm image, and perform feature extraction on the palm image, through a backbone network in a palm part detection model, to obtain image features at a plurality of sizes — 402

Perform, through a neck network of the palm part detection model, feature fusion on the image features at the plurality of sizes, to obtain a fused image feature — 404

Determine, through a prediction network of the palm part detection model based on the fused image feature, an image area defining a palm in the palm image — 406

Crop off a palm part image from the palm image based on the image area — 408

Perform image encryption on the palm part image, to obtain encrypted palm part image data which can be transmitted to a server which performs identity identification based on the encrypted palm part image data — 410

FIG. 4

Image feature 502

Palm image 501

Fused image feature 503

FIG. 5

First finger gap point
601

Second finger gap
point 602

Third finger gap
point 603

FIG. 6

Palm image 701

Backbone network 702

Neck network 703

Prediction network 704

Palm part image 705

Encryption network 706

Encrypted palm part image data 707

Network transmission 708

Decryption network 709

Verification network 710

User identifier 711

FIG. 7

User terminal 801

Capture a palm

Obtain a palm image

Move

Registration request

Binding success notification

1. Extract image features
2. Bind the image features to a user identifier
3. Generate a binding success notification

Payment application server 802

Merchant terminal 803

Capture a palm

Obtain a palm image

Payment request

Payment complete notification

1. Perform palm part comparison and identification
2. Pay
3. Generate a payment complete notification

FIG. 8

FIG. 9

Palm image 1001

↓

Focusing layer
1002 (3, 64, 1, 1)

↓

Convolution layer
1003 (64, 128, 3, 2)

↓

Bottleneck layer
1004
(128, 128)*3

↓

Convolution layer
1003 (128, 256, 3, 2)

↓

Bottleneck layer
1004
(256, 256)*9

↓

Convolution layer
1003 (256, 512, 3, 2)

↓

Bottleneck layer
1004 (512, 512)*9

↓

Convolution layer
1003 (512, 1024, 3, 2)

↓

Pooling layer 1005

↓

Bottleneck layer
1004 (1024, 1024)*3

Splice 1007

↑

Upsample 1006

↑

Convolution layer
1003 (512, 256, 1, 1)

↑

Bottleneck layer
1004 (1024, 512)*3

↑

Splice 1007

↑

Upsample 1006

↑

Convolution layer
1003 (1024, 512, 1, 1)

Bottleneck layer
1004 (512, 256)*3

↓

Convolution layer
1003 (512, 1024, 3, 2)

↓

Splice 1007

↓

Bottleneck layer
1004 (512, 512)*3

↓

Convolution layer
1003 (512, 512, 3, 2)

↓

Splice 1007

↓

Bottleneck layer
1004 (1024, 1024)*3

Image feature
1008 (512, 256)

Image feature
1008 (512, 512)

Image feature
1008 (1024, 1024)

FIG. 10

1110

1120

Palm part
detection model

FIG. 11

Obtain a sample palm image and a sample palm part image

1201

Perform feature extraction on the sample palm image, to obtain sample image features at a plurality of scales

1202

Fuse the sample image features at the plurality of scales, to obtain a sample fused image feature

1203

Determine, based on the sample fused image feature, a sample prediction image area defining a palm in the sample palm image

1204

Crop off a sample prediction image area from the sample palm image as a sample prediction palm part image

1205

Calculate a loss function value based on the sample palm part image and the sample prediction palm part image

1206

Update a model parameter of a palm part detection model based on the loss function value

1207

FIG. 12

Obtain a sample palm image and a sample palm part image — 1301

Perform feature extraction on the sample palm image, through a backbone network in a palm part detection model, to obtain sample image features at a plurality of scales — 1302

Perform, through a neck network of the palm part detection model, feature fusion on the sample image features at the plurality of scales, to obtain a sample fused image feature — 1303

Determine, through a prediction network of the palm part detection model based on the sample fused image feature, a sample prediction Image area corresponding to a palm in the sample palm image — 1304

Crop off the sample prediction image area from the sample palm image as a sample prediction palm part image — 1305

Calculate a loss function value according to the sample palm part image and the sample prediction palm part image — 1306

Update a model parameter of a palm part detection model based on the loss function value — 1307

FIG. 13

Feature extraction module — 1401

Feature fusion module — 1402

Prediction module — 1403

Cropping module — 1404

Encryption module — 1405

Obtaining module — 1406

Area identification module — 1407

FIG. 14

Obtaining module — 1501

Feature extraction module — 1502

Feature fusion module — 1503

Prediction module — 1504

Cropping module — 1505

Calculation module — 1506

Update module — 1507

Area identification module — 1508

FIG. 15

1600

1608

Network

1601

Central processing
unit

1607

Network interface
unit

1605

System bus

1604

1602

Random access
memory

Read-only memory

System memory  1603

1606

1609

Operating system

1610

Computer-readable
instruction

Mass storage
device

1611

Another program
module

FIG. 16

## INTERNATIONAL SEARCH REPORT

| International application No. |
| --- |
| **PCT/CN2023/118472** |

### A. CLASSIFICATION OF SUBJECT MATTER

G06V40/12(2022.01)i

According to International Patent Classification (IPC) or to both national classification and IPC

### B. FIELDS SEARCHED

Minimum documentation searched (classification system followed by classification symbols)

IPC: G06V, G06K

Documentation searched other than minimum documentation to the extent that such documents are included in the fields searched

Electronic data base consulted during the international search (name of data base and, where practicable, search terms used)

CNTXT, CNABS, CNKI, DWPI, VEN, ENTXT, ENTXTC: 裁剪, 感兴趣区域, 剪裁, 融合, 手掌, 特征, 提取, 预测, 掌部, 掌心, ROI, cut. feature, fusion, extraction, predict+, palm, hand

### C. DOCUMENTS CONSIDERED TO BE RELEVANT

| Category* | Citation of document, with indication, where appropriate, of the relevant passages | Relevant to claim No. |
| --- | --- | --- |
| Y | CN 113515988 A (TENCENT TECHNOLOGY (SHENZHEN) CO., LTD.) 19 October 2021 (2021-10-19) <br> description, paragraphs 5-9 and 172 | 1-2, 5, 14, 16-18 |
| Y | CN 114445881 A (SHENZHEN INTELLIFUSION TECHNOLOGY CO., LTD.) 06 May 2022 (2022-05-06) <br> description, paragraphs 5-16 | 1-2, 5, 14, 16-18 |
| A | WO 2021082684 A1 (PING AN TECHNOLOGY SHENZHEN CO., LTD.) 06 May 2021 (2021-05-06) <br> entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 December 2023** | **26 December 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/118472**

| Patent document cited in search report | | | Publication date (day/month/year) | Patent family member(s) | | | Publication date (day/month/year) |
|---|---|---|---|---|---|---|---|
| CN | 113515988 | A | 19 October 2021 | WO | 2022007559 | A1 | 13 January 2022 |
| | | | | US | 2022270396 | A1 | 25 August 2022 |
| CN | 114445881 | A | 06 May 2022 | | None | | |
| WO | 2021082684 | A1 | 06 May 2021 | CN | 110852216 | A | 28 February 2020 |

Form PCT/ISA/210 (patent family annex) (July 2022)